# EUROPEAN PATENT APPLICATION

(11) **EP 3 696 886 A1**
(43) Date of publication of application: **19.08.2020**
(21) Application number: 18865753.0
(22) Date of filing: 11.10.2018
(51) Int. Cl.: H01M 4/13, H01B 1/06, H01M 4/139, H01M 4/62, H01M 10/052, H01M 10/054, H01M 10/0562, H01M 10/058

(54) **SOLID ELECTROLYTE COMPOSITION, SOLID ELECTROLYTE-CONTAINING SHEET, ALL-SOLID SECONDARY BATTERY, AND PRODUCTION METHODS FOR SOLID ELECTROLYTE-CONTAINING SHEET AND ALL-SOLID SECONDARY BATTERY**

(30) Priority: 12.10.2017 JP 2017198575
(71) Applicant: FUJIFILM Corporation, Tokyo 106-8620 (JP)
(72) Inventor: MIMURA, Tomonori, Ashigarakami-gun Kanagawa 258-8577 (JP); MOCHIZUKI, Hiroaki, Ashigarakami-gun Kanagawa 258-8577 (JP); MAKINO, Masaomi, Ashigarakami-gun Kanagawa 258-8577 (JP)
(74) Representative: Hoffmann Eitle
(86) International application number: PCT/JP2018/037994
(87) International publication number: WO 2019/074074

(57) **Abstract**

Provided a solid electrolyte composition, a solid electrolyte-containing sheet formed of the solid electrolyte composition, an all-solid state secondary battery, a method of manufacturing the solid electrolyte-containing sheet, and a method of manufacturing the all-solid state secondary battery, in which the solid electrolyte composition includes binder resin particles having a specific molecular weight, an inorganic solid electrolyte, an active material, a conductive auxiliary agent, and a dispersion medium, in which an average particle size D_{B} of the binder resin particles, an average particle size D_{SE} of the inorganic solid electrolyte, an average particle size D_{AM} of the active material, and an average particle size D_{CA} of the conductive auxiliary agent satisfy D_{B}:D_{SE}:D_{AM}:D_{CA} = 1:1 to 100:2 to 200:0.01 to 100.

## Description

### BACKGROUND OF THE INVENTION

### 1. Field of the Invention

The present invention relates to a solid electrolyte composition, a solid electrolyte-containing sheet, an all-solid state secondary battery, a method of manufacturing a solid electrolyte-containing sheet, and a method of manufacturing an all-solid state secondary battery.

### 2. Description of the Related Art

A lithium ion secondary battery is a storage battery which has a negative electrode, a positive electrode, and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short circuit and ignition may be caused in batteries due to overcharging or overdischarging, and there is a demand for additional improvement in safety and reliability.

Under these circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety or reliability which is considered as a problem of batteries in which the organic electrolytic solution is used can be significantly improved, and it also becomes possible to extend the service lives. Further, an all-solid state secondary battery may have a structure in which electrodes and an electrolyte are directly disposed in series. Therefore, the energy density can be further increased as compared to a secondary battery in which an organic electrolytic solution is used, and the application to an electric vehicle or a large-sized storage battery is expected.

In the all-solid state secondary battery, as a material for forming a negative electrode active material layer, a solid electrolyte layer, or a positive electrode active material layer, a material including an inorganic solid electrolyte, an active material, and a binder is disclosed.

Examples of the material include a dispersion (WO2012/173089A, JP2016-149238A, JP2016-181472A) in which respective components are dispersed in a dispersion medium and a powder mixture (JP2012-227107A, JP2012-099315A) in which respective components are mixed in a solid state without using a dispersion medium. Specifically, WO2012/173089A describes a positive electrode active material slurry including an inorganic solid electrolyte, a binder formed of a core-shell particulate polymer having a specific average particle size, a positive electrode active material, and a conductive auxiliary agent. JP2016-149238A and JP2016-181472A describe a solid electrolyte composition including an inorganic solid electrolyte, a particulate polymer, an active material, a conductive auxiliary agent, and a dispersion medium.

### SUMMARY OF THE INVENTION

An active material layer of an all-solid state secondary battery is typically formed of solid particles such as an inorganic solid electrolyte, an active material, or binder resin particles. Therefore, interface contact between the solid particles, for example, between the active material and the inorganic solid electrolyte is not sufficient, and the interface resistance increases. On the other hand, in a case where binding properties between the solid particles are weak, a current collector is likely to peel off from the active material layer. In addition, poor contact between the solid particles, for example, between the active material and the inorganic solid electrolyte occurs due to contraction and expansion of the active material layer caused by intercalation and deintercalation of lithium ions. As a result, battery performance cannot be maintained.

An object of the present invention is to provide a solid electrolyte composition as a material for forming an active material layer of an all-solid state secondary battery with which an all-solid state secondary battery can be obtained in which an increase in interface resistance between solid particles can be suppressed and strong binding properties can be realized. In addition, another object of the present invention is to provide a solid electrolyte-containing sheet formed of the solid electrolyte composition, an all-solid state secondary battery, a method of manufacturing the solid electrolyte-containing sheet, and a method of manufacturing the all-solid state secondary battery.

As a result of various investigations by the present inventors, it was found that the obtained solid electrolyte composition exhibits high dispersibility by dispersing a combination of binder (resin) particles having a specific high molecular weight, an inorganic solid electrolyte, an active material, and a conductive auxiliary agent in a dispersion medium, the combination satisfying a specific particle size ratio. Further it was also found that, by using this solid electrolyte composition as a material for forming an active material layer of an all-solid state secondary battery, an active material layer in which solid particles are strongly bonded to each other while suppressing interface resistance between the solid particles can be formed, and excellent battery performance can be imparted to the all-solid state secondary battery. The present invention has been completed based on the above findings as a result of repeated investigation.

That is, the above-described objects have been achieved by the following means.
<1> A solid electrolyte composition comprising:
   binder resin particles that are formed of a polymer having a weight-average molecular weight of 5000 or higher;
   an Inorganic solid electrolyte having ion conductivity of a metal belonging to Group 1 or Group 2 in the periodic table;
   an active material that is capable of intercalating and deintercalating ions of a metal belonging to Group 1 or Group 2 in the periodic table;
   a conductive auxiliary agent; and
   a dispersion medium,
   in which the binder resin particles, the inorganic solid electrolyte, the active material, and the conductive auxiliary agent satisfy the following particle size ratio,
   an average particle size D_{B} of the binder resin particles:an average particle size D_{SE} of the inorganic solid electrolyte:an average particle size D_{AM} of the active material:an average particle size D_{CA} of the conductive auxiliary agent = 1:1 to 100:2 to 200:0.01 to 100.
<2> The solid electrolyte composition according to <1>,
   in which the average particle size D_{B} of the binder resin particles is 0.005 µm to 1 µm.
<3> The solid electrolyte composition according to <1> or <2>,
   in which the average particle size D_{SE} of the inorganic solid electrolyte is 0.2 µm to 4 µm.
<4> The solid electrolyte composition according to any one of <1> to <3>,
   in which the average particle size D_{AM} of the active material is 1 µm to 5 µm.
<5> The solid electrolyte composition according to any one of <1> to <4>,
   in which the average particle size D_{CA} of the conductive auxiliary agent is 0.01 µm to 0.5 µm.
<6> The solid electrolyte composition according to any one of <1> to <5>,
   in which the dispersion medium includes any one of an ester compound solvent, a ketone compound solvent, or an amine compound solvent.
<7> The solid electrolyte composition according to any one of <1> to <6>,
   in which the binder resin particles are particles of an acrylic resin or a polyurethane resin.
<8> The solid electrolyte composition according to any one of <1> to <7>,
   wherein a product of the average particle size D_{AM} of the active material and a specific surface area S_{AM} of the active material is less than 2 cm³/g.
<9> A solid electrolyte-containing sheet comprising:
   a layer that is formed of the solid electrolyte composition according to any one of <1> to <8>.
<10> A solid electrolyte-containing sheet comprising:
   binder resin particles that are formed of a polymer having a weight-average molecular weight of 5000 or higher;
   an inorganic solid electrolyte having ion conductivity of a metal belonging to Group 1 or Group 2 in the periodic table;
   an active material that is capable of intercalating and deintercalating ions of a metal belonging to Group 1 or Group 2 in the periodic table;
   a conductive auxiliary agent; and
   a dispersion medium,
   in which the binder resin particles, the inorganic solid electrolyte, the active material, and the conductive auxiliary agent satisfy the following particle size ratio,
   an average particle size D_{B} of the binder resin particles:an average particle size D_{SE} of the inorganic solid electrolyte:an average particle size D_{AM} of the active material:an average particle size D_{CA} of the conductive auxiliary agent =1:1 to 100:2 to 200:0.01 to 100.
<11> An all-solid state secondary battery comprising:
   a positive electrode active material layer;
   a negative electrode active material layer; and
   an inorganic solid electrolyte layer that is interposed between the positive electrode active material layer and the negative electrode active material layer,
   in which at least one of the positive electrode active material layer or the negative electrode active material layer is formed of the solid electrolyte composition according to any one of <1> to <8>.
<12> A method of manufacturing a solid electrolyte-containing sheet comprising:
   a step of forming a film of the solid electrolyte composition according to any one of <1> to <8>.
<13> A method of manufacturing an all-solid state secondary battery comprising:
   manufacturing an all-solid state secondary battery using the method according to <12>.

By using each of the solid electrolyte composition and the solid electrolyte-containing sheet according to the present invention as a material for forming an active material layer of an all-solid state secondary battery, an active material layer in which solid particles are strongly bonded to each other while suppressing interface resistance between the solid particles can be formed. In addition, the all-solid state secondary battery according to the present invention includes the active material layer having the above-described excellent characteristics, has low resistance, and can maintain excellent battery performance even in a case where charging and discharging are repeated. Further, in the method of manufacturing a solid electrolyte-containing sheet and the method of manufacturing an all-solid state secondary battery according to the present invention, a solid electrolyte-containing sheet and an all-solid state secondary battery having the above-described excellent characteristics can be manufactured.

The above-described and other characteristics and advantageous effects of the present invention will be clarified from the following description appropriately with reference to the accompanying drawings.

### BRIEF DESCRIPTION OF THE DRAWINGS

Fig. 1 is a vertical cross-sectional view schematically illustrating an all-solid state secondary battery according to a preferred embodiment of the present invention.
Fig. 2 is a vertical cross-sectional view schematically illustrating an all-solid state secondary battery (coin battery) prepared in Examples.

### DESCRIPTION OF THE PREFERRED EMBODIMENTS

In the description of the present invention, numerical ranges represented by "to" include numerical values before and after "to" as lower limit values and upper limit values.

### [Solid Electrolyte Composition]

A solid electrolyte composition according to an embodiment of the present invention comprises: binder resin particles that are formed of a polymer having a weight-average molecular weight of 5000 or higher; an Inorganic solid electrolyte having ion conductivity of a metal belonging to Group 1 or Group 2 in the periodic table; an active material that is capable of intercalating and deintercalating ions of a metal belonging to Group 1 or Group 2 in the periodic table; a conductive auxiliary agent; and a dispersion medium. In the solid electrolyte composition, the binder resin particles, the inorganic solid electrolyte, the active material, and the conductive auxiliary agent satisfy the following particle size ratio.
an average particle size D_{B} of the binder resin particles:an average particle size D_{SE} of the inorganic solid electrolyte:an average particle size D_{AM} of the active material:an average particle size D_{CA} of the conductive auxiliary agent = 1:1 to 100:2 to 200:0.01 to 100.

As long as the solid electrolyte composition according to the embodiment of the present invention includes a specific combination of the binder resin particles, the inorganic solid electrolyte, the active material, and the conductive auxiliary agent as the solid particles that satisfies the above-described particle size ratio, a state where they are mixed with a dispersant is not particularly limited. It is preferable that the solid electrolyte composition is dispersed in a dispersion medium at least before or during use, and it is more preferable that a slurry formed of the solid electrolyte composition is formed.

From the viewpoint that the solid electrolyte composition includes the active material and the conductive auxiliary agent, the solid electrolyte composition is suitable for forming an active material layer of an all-solid state secondary battery and will also be referred to as "electrode composition".

The solid electrolyte composition according to the embodiment of the present invention has the above-described configuration such that an active material layer in which binding properties between the solid particles are high and an increase in electrical resistance is suppressed can be formed.

Since an active material layer of an all-solid state secondary battery is formed of solid particles, high binding properties between the solid particles and a reduction in interface resistance are important from the viewpoint of battery performance. In order to further improve battery performance, a method of further adding a conductive auxiliary agent to an active material layer including an active material or the like to form a conductive path formed of the conductive auxiliary agent is effective. In order to form a conductive path, it is desirable that not only an active material or the like but also a conductive auxiliary agent are highly (uniformly) dispersed in a material for forming an active material layer or in a dispersion medium or an active material layer during the formation of the active material layer. However, in a case where the particle size of solid particles, in particular, the conductive auxiliary agent is small, dispersibility deteriorates due to an increase in viscosity and reaggregation.

Under the above-described circumstances, according to the present invention, regarding a relationship between the conductive auxiliary agent and other solid particles to be used together, a particle size ratio between the respective solid particles is set instead of simply reducing the particle size of the conductive auxiliary agent, and the combination of the solid particles of the binder resin particles having a specific molecular weight, the inorganic solid electrolyte, the active material, and the conductive auxiliary agent is used, the combination satisfying the particle size ratio. As a result, in the solid electrolyte composition according to the embodiment of the present invention, the precipitation rates of the respective solid particles can be controlled such that the respective solid particles are highly dispersed in a dispersion medium.

Therefore, in the active material layer formed of the solid electrolyte composition, the contact state between the solid particles, the formation of a conductive path, and the binding state between the solid particles are improved with a good balance. As a result, it is considered that, even while forming a conductive path, the solid particles are bonded to each other with strong binding properties, and the interface resistance between the solid particles is low. In the all-solid state secondary battery including the active material layer having the above-described excellent characteristics, the electrical resistance is low, and battery performance can be maintained even in a case where charging and discharging are repeated.

In the solid electrolyte composition according to the embodiment of the present invention, the particle size ratio that should be satisfied by the solid particles will be described.

The binder resin particles, the inorganic solid electrolyte, the active material, and the conductive auxiliary agent used in the present invention satisfies the following (Particle Size Ratio).

### (Particle Size Ratio)

D_{B}:D_{SE}:D_{AM}:D_{CA} = 1:1 to 100:2 to 200:0.01 to 100

In the particle size ratio, D_{B} represents the average particle size of the binder resin particles, D_{SE} represents the average particle size of the inorganic solid electrolyte, D_{AM} represents the average particle size of the active material, and D_{CA} represents the average particle size of the conductive auxiliary agent.

In a case where the respective particles included in the solid electrolyte composition according to the embodiment of the present invention satisfy the above-described particle size ratio, as described above, binding properties between the solid particles are high and the interface resistance is suppressed in the active material layer, and an all-solid state secondary battery in which excellent battery performance can be maintained even in a case where charging and discharging are repeated can be manufactured.

By setting the ratio of D_{SE} to D_{B} to be in the above-described range, the precipitation rates of the respective solid particles can be controlled, and the respective solid particles can be highly dispersed in a dispersion medium. In addition, the ion conductivity between the particles of the inorganic solid electrolyte and the contact area (resistance) between the inorganic solid electrolyte and the active material can be improved at the same time with a good balance. For example, in a case where the ratio of D_{SE} to D_{B} is excessively low, the area of interfaces between the particles of the inorganic solid electrolyte increases such that the ion conductivity may increase. On the other hand, in a case where D_{SE} is excessively large, the precipitation rate increases such that the dispersed state deteriorates. In addition, the contact area between the inorganic solid electrolyte and the active material decreases such that the resistance may increase.

By setting the ratio of D_{AM} to D_{B} to be in the above-described range, the binder does not cover the active material more than necessary. Therefore, an increase in interface resistance can be suppressed, the contact area can be secured to some extent, and thus high binding properties are exhibited. For example, in a case where the ratio of D_{AM} to D_{B} is excessively low, the surface area of the active material increases, the number of the binder particles becomes relatively small, and thus binding properties may deteriorate. On the other hand, in a case where the ratio of D_{AM} to D_{B} is excessively high, the binder covers the active material more than necessary, and thus the resistance may increase.

By setting the ratio D_{CA} to D_{B} to be in the above-described range, the conductive auxiliary agent and the like can be highly dispersed in a dispersion medium. In addition, a conductive path can be sufficiently formed, and the conductive auxiliary agent is not covered with the binder more than necessary. Therefore, the interface resistance can be reduced, the contact area can be secured to some extent, and thus high binding properties are exhibited. For example, in a case where the ratio of D_{CA} to D_{B} is excessively low, reaggregation occurs, the dispersion stability deteriorates, the formation of a conductive path is insufficient, and thus the resistance may increase. On the other hand, in a case where the ratio of D_{CA} to D_{B} is excessively high, the fluidity of the solid electrolyte composition decreases, the uniformity decreases, and deterioration of the battery during use may be accelerated.

Focusing on the particle size of the binder resin particles, by setting the particle size of the binder resin particles to be in the above-described range with respect to the active material, the inorganic solid electrolyte, and the conductive auxiliary agent, the resistance and the binding properties can be simultaneously improved. In a case where the particle size of the binder resin particles is excessively low, the binder resin particles cover the surface of the active material or the inorganic solid electrolyte more than necessary, the resistance may increase. On the other hand, in a case where the particle size of the binder resin particles is excessively large, the number of particles that improve the binding properties between the particles of the active material or the inorganic solid electrolyte decreases such that the binding properties may deteriorate.

In the present invention, in a case where the binder resin particles, the inorganic solid electrolyte, the active material, and the conductive auxiliary agent satisfy the above-described particle size ratio, the above-described effects exhibited by the regulations of the particle size ratio between the respective solid particles act together such that the dispersibility of the solid particles can improved and the contact state and the binding state between the solid particles can be simultaneously improved with a good balance.

From the viewpoint that the resistance and the binding properties can be improved at a higher level, the particle size ratio that is satisfied by the binder resin particles, the inorganic solid electrolyte, the active material, and the conductive auxiliary agent, the following (particle size ratio 1) is preferable, the following (particle size ratio 2) is more preferable, and the following (particle size ratio 3) is still more preferable.

### (Particle Size Ratio 1)

D_{B}:D_{SE}:D_{AM}:D_{CA} = 1:3 to 50:5 to 100:0.05 to 20

### (Particle Size Ratio 2)

D_{B}:D_{SE}:D_{AM}:D_{CA}1:5 to 30:10 to 80:0.1 to 10

### (Particle Size Ratio 3)

D_{B}:D_{SE}:D_{AM}:D_{CA} = 1:11 to 30:21 to 60:0.5 to 5

The particle size ratio is regulated by a combination D_{B}, D_{SE}, D_{AM}, and D_{CA}. In the present invention, the particle size ratio can be regulated by appropriately combining the particle sizes of the respective components in (Particle Size Ratio) and (Particle Size Ratio 1) to (Particle Size Ratio 3). For example, by combining 0.5 to 5 in (Particle Size Ratio 3) as the particle size ratio of D_{CA} to D_{B} in (Particle Size Ratio) described above, the particle size ratio can be regulated as D_{B}:D_{SE}:D_{AM}:D_{CA} = 1:1 to 100:2 to 200:0.5 to 5.

The moisture content (also referred to as "water content") in the solid electrolyte composition according to the embodiment of the present invention is preferably 50 ppm or lower, more preferably 20 ppm or lower, still more preferably 10 ppm or lower, and still more preferably 5 ppm or lower. In a case where the moisture content of the solid electrolyte composition is low, deterioration of the inorganic solid electrolyte can be suppressed. The moisture content refers to the amount of water (the mass ratio thereof to the solid electrolyte composition) in the solid electrolyte composition and specifically can be obtained by Karl Fischer titration after filtering the solid electrolyte composition the through a membrane filter having a pore size of 0.02 µm.

Hereinafter, the components that are included in the solid electrolyte composition according to the embodiment of the present invention and components that may be included therein will be described.

### <Inorganic Solid Electrolyte>

In the present invention, the inorganic solid electrolyte is an inorganic solid electrolyte, and the solid electrolyte refers to a solid-form electrolyte capable of migrating ions therein. The inorganic solid electrolyte is clearly distinguished from organic solid electrolytes (polymer electrolytes such as polyethylene oxide (PEO) and organic electrolyte salts such as lithium bis(trifluoromethanesulfonyl)imide (LiTFSI)) since the inorganic solid electrolyte does not include any organic substance as a principal ion conductive material. In addition, the inorganic solid electrolyte is solid in a steady state and thus, typically, is not dissociated or liberated into cations and anions. Due to this fact, the inorganic solid electrolyte is also clearly distinguished from inorganic electrolyte salts of which cations and anions are dissociated or liberated in electrolytic solutions or polymers (LiPF₆, LiBF₄, LiFSI, LiCl, and the like). The inorganic solid electrolyte is not particularly limited as long as it has ion conductivity of a metal belonging to Group 1 or Group 2 in the periodic table and generally does not have electron conductivity.

In the present invention, the inorganic solid electrolyte has ion conductivity of a metal belonging to Group 1 or Group 2 in the periodic table. The inorganic solid electrolyte can be appropriately selected from solid electrolyte materials to be applied to this kind of products and used. Representative examples of the inorganic solid electrolyte include (i) a sulfide-based inorganic solid electrolyte and (ii) an oxide-based inorganic solid electrolyte. From the viewpoint of a high ion conductivity and easiness in joining interfaces between particles, a sulfide-based inorganic solid electrolyte is preferable.

In a case where an all-solid state secondary battery according to the embodiment of the present invention is an all-solid state lithium ion secondary battery, the inorganic solid electrolyte preferably has ion conductivity of lithium ions.

### (i) Sulfide-Based Inorganic Solid Electrolyte

The sulfide-based inorganic solid electrolyte is preferably a compound that contains a sulfur atom (S), has ion conductivity of a metal belonging to Group 1 or Group 2 in the periodic table, and has electron-insulating properties. The sulfide-based inorganic solid electrolyte is preferably an inorganic solid electrolyte that contains at least Li, S, and P as elements and has lithium ion conductivity. However, the sulfide-based inorganic solid electrolyte may include elements other than Li, S, and P depending on the purposes or cases.

Examples of the sulfide-based inorganic solid electrolyte include a lithium ion-conductive inorganic sulfide-based inorganic solid electrolyte satisfying a composition represented by the following Formula (I).

Lₐ₁M_{b1}P_{c1}S_{d1}Aₑ₁ Formula (I)

In the formula, L represents an element selected from Li, Na, or K and is preferably Li. M represents an element selected from B, Zn, Sn, Si, Cu, Ga, Sb, Al, or Ge. A represents an element selected from I, Br, Cl, or F. al to el represent the compositional ratios among the respective elements, and a1:b1:c1:d1:e1 satisfies 1 to 12:0 to 5:1:2 to 12:0 to 10. al is preferably 1 to 9 and more preferably 1.5 to 7.5. b1 is preferably 0 to 3 and more preferably 0 to 1. d1 is preferably 2.5 to 10 and more preferably 3.0 to 8.5. el is preferably 0 to 5 and more preferably 0 to 3.

The compositional ratios among the respective elements can be controlled by adjusting the ratios of raw material compounds blended to manufacture the sulfide-based inorganic solid electrolyte as described below.

The sulfide-based inorganic solid electrolyte may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide (Li₂S), phosphorus sulfide (for example, diphosphoruspentasulfide (P₂S₅)), a phosphorus single body, a sulfur single body, sodium sulfide, hydrogen sulfide, lithium halides (for example, Lil, LiBr, and LiCl), or sulfides of an element represented by M (for example, SiS₂, SnS, and GeS₂).

The ratio between Li₂S and P₂S₅ in Li-P-S-based glass and Li-P-S-based glass ceramic is preferably 60:40 to 90:10 and more preferably 68:32 to 78:22 in terms of the molar ratio between Li₂S:P₂S₅. In a case where the ratio between Li₂S and P₂S₅ is set in the above-described range, it is possible to increase the lithium ion conductivity. Specifically, the lithium ion conductivity can be preferably set to 1 × 10⁻⁴ S/cm or more and more preferably set to 1 × 10⁻³ S/cm or more. The upper limit is not particularly limited, but realistically 1 × 10⁻¹ S/cm or less.

As specific examples of the sulfide-based inorganic solid electrolytes, combination examples of raw materials will be described below. Examples thereof include Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, and Li₁₀GeP₂S₁₂. Mixing ratios of the respective raw materials do not matter. Examples of a method for synthesizing the sulfide-based inorganic solid electrolyte material using the above-described raw material compositions include an amorphization method. Examples of the amorphization method include a mechanical milling method, a solution method, and a melting quenching method. This is because treatments at a normal temperature become possible, and it is possible to simplify manufacturing steps.

### (ii) Oxide-Based Inorganic Solid Electrolyte

The oxide-based inorganic solid electrolyte is preferably a compound that contains an oxygen atom (O), has ion conductivity of a metal belonging to Group 1 or Group 2 in the periodic table, and has electron-insulating properties. The ion conductivity of the oxide-based inorganic solid electrolyte is preferably 1 × 10⁻⁶ S/cm or more, more preferably 5 × 10⁻⁶ S/cm or more, and particularly preferably 1 × 10⁻⁵ S/cm or more. The upper limit is not particularly limited, but realistically 1 × 10⁻¹ S/cm or less.

Specific examples of the compound include LiₓₐLa_{ya}TiO₃ [xa = 0.3 to 0.7 and ya = 0.3 to 0.7] (LTO), Li_{xb}La_{yb}Zr_{zb}M^{bb}_{mb}O_{nb} (M^{bb} is at least one element of Al, Mg, Ca, Sr, V, Nb, Ta, Ti, Ge, In or Sn, xb satisfies 5 ≤ xb ≤ 10, yb satisfies 1≤yb ≤ 4, zb satisfies 1 ≤ zb ≤ 4, mb satisfies 0 ≤ mb ≤ 2, and nb satisfies 5 ≤ nb ≤ 20.), Li_{xc}B_{yc}M^{cc}_{zc}O_{nc} (M^{cc} is at least one element of C, S, Al, Si, Ga, Ge, In, or Sn, xc satisfies 0 ≤ xc ≤ 5, yc satisfies 0 ≤ yc ≤ 1, zc satisfies 0 ≤ zc ≤ 1, and nc satisfies 0 ≤ nc ≤ 6), Li_{xd}(Al, Ga)_{yd}(Ti, Ge)_{zd}Si_{ad}P_{md}O_{nd} (1 ≤ xd ≤ 3, 0 ≤ yd ≤ 1, 0 ≤ zd ≤ 2, 0 ≤ ad ≤ 1, 1 ≤ md ≤ 7, 3 ≤ nd ≤ 13), Li₍₃₋₂ₓₑ₎M^{ee}ₓₑD^{ee}O (xe represents a number of 0 or more and 0.1 or less, and M^{ee} represents a divalent metal atom. D^{ee} represents a halogen atom or a combination of two or more halogen atoms.), Li_{xf}Si_{yf}O_{zf} (1 ≤ xf ≤ 5, 0 < yf ≤ 3, 1 ≤ zf ≤ 10), Li_{xg}S_{yg}O_{zg} (1 ≤ xg ≤ 3, 0 < yg ≤ 2, 1 ≤ zg ≤ 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w satisfies w < 1), Li_{3.5}Zn_{0.25}GeO₄ having a lithium super ionic conductor (LISICON)-type crystal structure, La_{0.55}Li_{0.35}TiO₃ having a perovskite-type crystal structure, LiTi₂P₃O₁₂ having a natrium super ionic conductor (NASICON)-type crystal structure, Li_{1+xh+yh}(Al, Ga)ₓₕ(Ti, Ge)₂₋ₓₕSi_{yh}P_{3-yh}O₁₂ (0 ≤ xh ≤ 1, 0 ≤ yh ≤ 1), Li₇La₃Zr₂O₁₂ (LLZ) having a garnet-type crystal structure. In addition, phosphorus compounds containing Li, P, and O are also desirable. Examples thereof include lithium phosphate (Li₃PO₄) and LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like). It is also possible to preferably use LiA¹ON (A¹ represents at least one element selected from Si, B, Ge, Al, C, Ga, or the like) and the like.

The inorganic solid electrolyte is preferably in the form of particles. In this case, the average particle size (volume average particle size) D_{SE} of the inorganic solid electrolyte is not particularly limited as long as it satisfies the above-described particle size ratio. From the viewpoint of ion conductivity, workability, and interface formability, it is preferable that the average particle size D_{SE} is set in a range where the following upper limit and the following lower limit are appropriately combined. The lower limit of the average particle size D_{SE} is preferably 0.01 µm or more, more preferably 0.2 µm or more, and still more preferably 0.3 µm or more. The upper limit of the average particle size D_{SE} is preferably 100 µm or less, more preferably 50 µm or less, still more preferably 20 µm or less, still more preferably 4 µm or less, and most preferably 2 µm or less.

The average particle size D_{SE} of the inorganic solid electrolyte particles is measured in the following order.

The inorganic solid electrolyte particles are diluted and prepared to 1 mass% of a dispersion liquid by using water (heptane in a case where the inorganic solid electrolyte is unstable in water) in a 20 mL sample bottle. The diluted dispersion specimen is irradiated with 1 kHz ultrasonic waves for 10 minutes and is then immediately used for testing. The volume average particle size is obtained by acquiring data 50 times using this dispersion liquid specimen, a laser diffraction/scattering particle size distribution analyzer LA-920 (trade name, manufactured by Horiba Ltd.), and a quartz cell for measurement at a temperature of 25°C. Other detailed conditions and the like can be found in JIS Z8828: 2013 "Particle Size Analysis-Dynamic Light Scattering" as necessary. For each level, five samples are prepared and the average value thereof is adopted.

As the inorganic solid electrolyte, one kind may be used alone, or two or more kinds may be used in combination.

The content of the inorganic solid electrolyte in the solid electrolyte composition is not particularly limited. From the viewpoints of reducing the interface resistance during use in the all-solid state secondary battery and maintaining the reduced interface resistance, the total content of the inorganic solid electrolyte and the active material is preferably 5 mass% or higher, more preferably 10 mass% or higher, and still more preferably 20 mass% or higher with respect to 100 mass% of the solid components. From the same viewpoint, the upper limit is preferably 99.9 mass% or lower, more preferably 99.5 mass% or lower, and particularly preferably 99 mass% or lower.

In the present invention, the solid content (solid component) refers to components that neither volatilize nor evaporate and disappear in a case where the solid electrolyte composition is dried at 120°C for 6 hours in a nitrogen atmosphere at a pressure of 1 mmHg. Typically, the solid content refers to components other than a dispersion medium described below.

### <Binder Resin Particles>

The solid electrolyte composition according to the embodiment of the present invention includes binder resin particles. The binder resin particles are not particularly limited as long as they are resin particles formed of various polymers and are preferably resin particles formed of a polymer including a macromonomer component.

The binder resin particles may be particles formed of a binder resin that is typically used in a solid electrolyte composition for an all-solid state secondary battery, and examples thereof include resin particles formed of an organic resin.

As the binder resin particles, for example, binder resin particles formed of the following organic resins are preferable.

Examples of a fluorine-containing resin include polytetrafluoroethylene (PTFE), polyvinylidene fluoride (PVdF), and a copolymer (PVdF-HFP) of polyvinylidene fluoride and hexafluoropropylene.

Examples of a hydrocarbon-based thermoplastic resin include polyethylene, polypropylene, styrene-butadiene rubber (SBR), hydrogenated styrene-butadiene rubber (HSBR), butylene rubber, acrylonitrile-butadiene rubber, polybutadiene, and polyisoprene.

Examples of a (meth)acrylic resin include various (meth)acrylic monomers, (meth)acrylamide monomers, copolymers of two or more monomers thereof (preferably a copolymer of acrylic acid and methyl acrylate).

In addition, copolymers of vinyl monomers are also be suitably used. Examples of the copolymers include a copolymer of methyl (meth)acrylate and styrene, a copolymer of methyl (meth)acrylate and acrylonitrile, and a copolymer of butyl (meth)acrylate, acrylonitrile, and styrene. In the present specification, the copolymer may be any one of a statistic copolymer or a periodic copolymer and is preferably a block copolymer.

Examples of other resins include a polyurethane resin, a polyurea resin, a polyamide resin, a polyimide resin, a polyester resin, a polyether resin, a polycarbonate resin, and a cellulose derivative resin.

Examples of the polymer including a macromonomer component or the (meth)acrylic resin include those formed of polymers described in JP2015-088486A. In addition, examples of the polyurethane resin, the polyurea resin, the polyamide resin, and the polyimide resin include those formed of a polymer having a urethane bond, a polymer having a urea bond, a polymer having an amide bond, and a polymer having an imide bond described in JP2015-088480A.

Among these, a fluorine-containing resin, a hydrocarbon-based thermoplastic resin, a (meth)acrylic resin, a polyurethane resin, a polycarbonate resin, or a cellulose derivative resin is preferable, and an acrylic resin or a polyurethane resin is more preferable from the viewpoint of high affinity to the inorganic solid electrolyte, high flexibility of the resin itself, and strong binding properties with the solid particles.

As the binder resin particles or the polymer forming the binder resin particles, a commercially available product can be used. In addition, the binder resin particles or the polymer forming the binder resin particles can also be prepared using an ordinary method.

The moisture content of the binder resin particles is preferably 100 ppm (by mass) or lower.

The binder resin particles may be used in the form of a solid or in the form of a dispersion liquid or a solution.

The weight-average molecular weight of the polymer forming the binder resin particles is 5,000 or higher. In a case where a solid electrolyte-containing sheet includes binder resin particles formed of a polymer (resin) having a weight-average molecular weight of 5000 or higher, the mechanical strength of the binder is improved, and the solid electrolyte-containing sheet has high binding properties.

The weight-average molecular weight of the polymer is preferably 10,000 or higher and more preferably 30,000 or higher. The upper limit is practically 1,000,000 or lower, more preferably 200,000 or lower, and still more preferably 100,000 or lower. An aspect in which the binder resin particles are formed of a crosslinked product of a polymer having a weight-average molecular weight in the above-described range is also preferable.

In the present invention, unless specified otherwise, the weight-average molecular weight of the polymer forming the binder resin particles refers to the weight-average molecular weight in terms of standard polystyrene measured by gel permeation chromatography (GPC). Regarding a measurement method, basically, a value measured using a method under the following conditions is used. In this case, an appropriate eluent can be appropriately selected and used depending on the kind of the polymer.

### (Conditions)

Column: A column obtained by connecting TOSOH TSKgel Super HZM-H (trade name), TOSOH TSKgel Super HZ4000 (trade name), and TOSOH TSKgel Super HZ2000 (trade name)
Carrier: tetrahydrofuran
Measurement temperature: 40°C
Carrier flow rate: 1.0 mL/min
Sample concentration: 0.1 mass%
Detector: refractive index (RI) detector

The shape of the binder resin particles is not particularly limited as long as it has a particle shape, and may be a particle shape or an unstructured shape in the solid electrolyte composition, the solid electrolyte-containing sheet, or, the all-solid state secondary battery.

In the present invention, the average particle size D_{B} of the binder resin particles is not particularly limited as long as it satisfies the above-described particle size ratio. From the viewpoint of ion conductivity and binding properties between the solid particles, it is preferable that the average particle size D_{B} is set in a range where the following upper limit and the following lower limit are appropriately combined. The lower limit of the average particle size D_{B} is preferably 0.005 µm or more and more preferably 0.1 µm or more. The upper limit of the average particle size D_{B} is preferably 1 µm or less and more preferably 0.5 µm or less. The average particle size D_{B} of the binder resin particles is measured using the same method as that of the average particle size D_{SE} of the inorganic solid electrolyte. In a case where the average particle size D_{B} is less than or equal to a measurement limit of the device, the average particle size refers to a value measured using a transmission electron microscope (TEM) after appropriately drying and hardening the binder resin particles.

As the binder resin particles, a commercially available product may be used, or binder resin particles described in JP2016-139511A can be suitably used.

In the present invention, it is preferable that the binder resin particles are insoluble in a dispersion medium from the viewpoint of the dispersion stability of the solid electrolyte composition and the viewpoint of obtaining an all-solid state secondary battery having high ion conductivity. Here, "the binder resin particles being insoluble in a dispersion medium" represents that the average particle size D_{B} is not reduced by 10% or higher, preferably 5% or higher, and more preferably 1% or higher even in a case where the binder resin particles are added to a dispersion medium at 30°C and are left to stand for 24 hours.

From the viewpoints of reducing the interface resistance during use in the all-solid state secondary battery and maintaining the reduced interface resistance, the content of the binder resin particles in the solid electrolyte composition is preferably 0.01 mass% or higher, more preferably 0.1 mass% or higher, and still more preferably 1 mass% or higher with respect to 100 mass% of the solid components. From the viewpoint of battery performance, the upper limit is preferably 20 mass% or lower, more preferably 10 mass% or lower, and still more preferably 5 mass% or lower.

In the solid electrolyte composition according to the embodiment of the present invention, the mass ratio [(the mass of the inorganic solid electrolyte + the mass of the active material)/(the mass of the binder resin particles)] of the total mass (total amount) of the inorganic solid electrolyte and the active material to the mass of the binder resin particles is preferably in a range of 1,000 to 1. This ratio is preferably 500 to 2 and still more preferably 100 to 10.

As the binder resin particles, one kind may be used alone, or two or more kinds may be used in combination.

### <Active Material>

The solid electrolyte composition according to the embodiment of the present invention includes the active material capable of intercalating and deintercalating ions of a metal element belonging to Group 1 or Group 2 in the periodic table. Examples of the active material include a positive electrode active material and a negative electrode active material.

The shape of the active material is not particularly limited, but is preferably a particle shape. In this case, the volume average particle size (circle-equivalent average particle size) D_{AM} of the active material is not particularly limited as long as it satisfies the above-described particle size ratio. From the viewpoint of improving the dispersibility and the contact area between the solid particles and reducing interface reactivity, it is preferable that the average particle size D_{AM} is set in a range where the following upper limit and the following lower limit are appropriately combined. The lower limit of the average particle size D_{AM} is preferably 0.1 µm or more, more preferably 1 µm or more, and still more preferably 2 µm or more. The upper limit of the average particle size D_{AM} is preferably 20 µm or less, more preferably 10 µm or less, and still more preferably 5 µm or less. The average particle size D_{AM} of the active material is measured using the same method as that of the average particle size D_{SE} of the inorganic solid electrolyte. In a case where the average particle size D_{AM} is less than or equal to a measurement limit of the device, the average particle size refers to a value measured using a transmission electron microscope (TEM) after appropriately drying and hardening the active material.

A specific surface area S_{AM} of the active material is not particularly limited and is preferably 0.001 m²/g or more, more preferably 0.01 m²/g or more, and still more preferably 0.1 m²/g or more. The upper limit is preferably 100 m²/g or less, more preferably 1 m²/g or less, and still more preferably 0.4 m²/g or less. The specific surface area of the active material can be measured using a Specific surface area measuring device BELSORP-mini (trade name, manufactured by MicrotracBEL Corp.). In the present invention, the specific surface area S_{AM} can be set in a range where the following upper limit and the following lower limit are appropriately combined. In a case where the active material has the specific surface area S_{AM} in the above-described range, the contact area and the binding properties between the solid particles can be simultaneously improved.

It is preferable that the product (D_{AM} × S_{AM}) of the average particle size D_{AM} (µm) and the specific surface area S_{AM} (m²/g) of the active material is less than 2 cm³/g. In a case where the product (D_{AM} × S_{AM}) is less than 2 cm³/g, the surface of the active material can be made flat and a reaction with the inorganic solid electrolyte can be effectively suppressed. The product (D_{AM} × S_{AM}) is preferably 0.01 cm³/g or more and less than 2 cm³/g, more preferably 0.1 to 1 cm³/g, and still more preferably 0.2 to 0.5 cm³/g.

Examples of the active material include a positive electrode active material and a negative electrode active material. In particular, a metal oxide (preferably a transition metal oxide) that is the positive electrode active material, a metal oxide that is the negative electrode active material, or metal such as Sn, Si, Al, or In capable of forming an alloy with lithium is preferable.

In the present invention, the solid electrolyte composition including the active material (the positive electrode active material or the negative electrode active material) will be referred to as an electrode composition (a positive electrode composition or a negative electrode composition).

### (Positive Electrode Active Material)

The positive electrode active material is preferably capable of reversibly intercalating and deintercalating lithium ions. The above-described material is not particularly limited as long as the material has the above-described characteristics and may be transition metal oxides, organic substances, elements capable of being complexed with Li such as sulfur, complexes of sulfur and metal, or the like.

Among these, as the positive electrode active material, transition metal oxides are preferably used, and transition metal oxides having a transition metal element M^{a} (one or more elements selected from Co, Ni, Fe, Mn, Cu, and V) are more preferable. In addition, an element M^{b} (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element M^{a}. It is more preferable that the transition metal oxide is synthesized by mixing the above components such that a molar ratio Li/M^{a} is 0.3 to 2.2.

Specific examples of the transition metal oxides include transition metal oxides having a layered rock salt structure (MA), transition metal oxides having a spinel-type structure (MB), lithium-containing transition metal phosphate compounds (MC), lithium-containing transition metal halogenated phosphate compounds (MD), and lithium-containing transition metal silicate compounds (ME).

Specific examples of the transition metal oxides having a layered rock salt structure (MA) include LiCoO₂ (lithium cobalt oxide [LCO]), LiNi₂O₂ (lithium nickel oxide) LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickel oxide).

Specific examples of the transition metal oxides having a spinel-type structure (MB) include LiMn₂O₄ (LMO), LiCoMnO₄, Li₂FeMn₃O₈, Li₂CuMn₃O₈, Li₂CrMn₃O₈, and Li₂NiMn₃O₈.

Examples of the lithium-containing transition metal phosphate compounds (MC) include olivine-type iron phosphate salts such as LiFePO₄ and Li₃Fe₂(PO₄)₃, iron pyrophosphates such as LiFeP₂O₇, and cobalt phosphates such as LiCoPO₄, and monoclinic nasicon-type vanadium phosphate salt such as Li₃V₂(PO₄)₃ (lithium vanadium phosphate).

Examples of the lithium-containing transition metal halogenated phosphate compounds (MD) include iron fluorophosphates such as Li₂FePO₄F, manganese fluorophosphates such as Li₂MnPO₄F, cobalt fluorophosphates such as Li₂CoPO₄F.

Examples of the lithium-containing transition metal silicate compounds (ME) include Li₂FeSiO₄, Li₂MnSiO₄, and Li₂CoSiO₄.

In the present invention, the transition metal oxides having a layered rock salt structure (MA) is preferable, and LCO or NMC is more preferable.

In order to allow the positive electrode active material to have a predetermined particle size, an ordinary pulverizer or classifier may be used. Positive electrode active materials obtained using a calcination method may be used after being washed with water, an acidic aqueous solution, an alkaline aqueous solution, or an organic solvent.

As the positive electrode active material, one kind may be used alone, or two or more kinds may be used in combination.

In the case of forming a positive electrode active material layer, the mass (mg) of the positive electrode active material per unit area (cm²) of the positive electrode active material layer (weight per unit area) is not particularly limited and can be appropriately determined depending on the designed battery capacity.

The content of the positive electrode active material in the solid electrolyte composition is not particularly limited, but is preferably 10 to 95 mass%, more preferably 30 to 90 mass%, still more preferably 50 to 85 mass%, and particularly preferably 55 to 80 mass% with respect to a solid content of 100 mass%.

### (Negative Electrode Active Material)

The negative electrode active material is preferably capable of reversibly intercalating and deintercalating lithium ions. The above-described material is not particularly limited as long as the material has the above-described characteristics, and examples thereof include carbonaceous materials, metal oxides such as tin oxide, silicon oxide, metal composite oxides, a lithium single body, lithium alloys such as lithium aluminum alloys, metals capable of forming alloys with lithium such as Sn, Si, Al, and In and the like. Among these, a carbonaceous material or a lithium composite oxide is preferably used from the viewpoint of reliability. In addition, the metal composite oxide is preferably capable of intercalating and deintercalating lithium. The material is not particularly limited, but preferably includes titanium and/or lithium as a constituent element from the viewpoint of high current density charging-discharging characteristics.

The carbonaceous material which is used as the negative electrode active material is a material substantially containing carbon. Examples thereof include petroleum pitch, carbon black such as acetylene black (AB), graphite (natural graphite, artificial graphite such as vapor-grown graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

The metal oxides and the metal composite oxides being applied as the negative electrode active material are particularly preferably amorphous oxides, and furthermore, chalcogenides which are reaction products between a metal element and an element belonging to Group 16 in the periodic table are also preferably used. "Amorphous" described herein represents an oxide having a broad scattering band with a peak in a range of 20° to 40° in terms of 2θ when measured by an X-ray diffraction method using CuKα rays, and the oxide may have a crystal diffraction line.

In a compound group consisting of the amorphous oxides and the chalcogenides, amorphous oxides of metalloid elements and chalcogenides are more preferred, and elements belonging to Groups 13 (IIIB) to 15 (VB) of the periodic table, oxides consisting of one element or a combination of two or more elements of Al, Ga, Si, Sn, Ge, Pb, Sb, and Bi, and chalcogenides are particularly preferable. Specific examples of preferred amorphous oxides and chalcogenides include Ga₂O₃, SiO, GeO, SnO, SnO₂, PbO, PbO₂, Pb₂O₃, Pb₂O₄, Pb₃O₄, Sb₂O₃, Sb₂O₄, Sb₂O₈Bi₂O₃, Sb₂O₈Si₂O₃, Bi₂O₄, SnSiO₃, GeS, SnS, SnS₂, PbS, PbS₂, Sb₂S₃, Sb₂S₅, and SnSiS₃. In addition, these amorphous oxides may be composite oxides with lithium oxide, for example, Li₂SnO₂.

The negative electrode active material preferably contains a titanium atom. More specifically, Li₄Ti₅O₁₂ (lithium titanium oxide [LTO]) is preferable since the volume fluctuation during the intercalation and deintercalation of lithium ions is small, and thus the high-speed charging-discharging characteristics are excellent, and the deterioration of electrodes is suppressed, whereby it becomes possible to improve the service lives of lithium ion secondary batteries.

In the present invention, a Si-based negative electrode is also preferably applied. Generally, a Si negative electrode is capable of intercalating a larger number of Li ions than a carbon negative electrode (graphite, acetylene black, or the like). That is, the amount of Li ions intercalated per unit mass increases. Therefore, it is possible to increase the battery capacity. As a result, there is an advantage that the battery driving duration can be extended.

In order to allow the negative electrode active material to have a predetermined particle size, an ordinary pulverizer or classifier may be used. For example, a mortar, a ball mill, a sand mill, an oscillatory ball mill, a satellite ball mill, a planetary ball mill, a swirling airflow-type jet mill, a sieve, or the like is preferably used. During the pulverization, wet pulverization of causing water or an organic solvent such as methanol to coexist with the negative electrode active material can be appropriately performed. In order to obtain a desired particle size, it is preferable to perform classification. A classification method is not particularly limited, and a method using, for example, a sieve or an air classifier can be appropriately used. The classification can be used using a dry method or a wet method.

The chemical formulae of the compounds obtained using a calcination method can be computed using inductively coupled plasma (ICP) optical emission spectroscopy as a measurement method from the mass difference of powder before and after calcinating as a convenient method.

As the negative electrode active material, one kind may be used alone, or two or more kinds may be used in combination.

In the case of forming a negative electrode active material layer, the mass (mg) of the negative electrode active material per unit area (cm²) in the negative electrode active material layer (weight per unit area) is not particularly limited and can be appropriately determined depending on the designed battery capacity.

The content of the negative electrode active material in the solid electrolyte composition is not particularly limited, but is preferably 10 to 80 mass% and more preferably 20 to 80 mass% with respect to the solid content of 100 mass%.

### -Surface Coating of Active Material-

The surfaces of the positive electrode active material and the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, lithium and lithium niobate-based compounds, and specific examples thereof include Li₄Ti₅O₁₂, Li₂Ti₂O₅, LiTaO₃, LiNbO₃, LiAlO₂, Li₂ZrO₃, Li₂WO₄, Li₂TiO₃, Li₂B₄O₇, Li₃PO₄, Li₂MoO₄, Li₃BO₃, LiBO₂, Li₂CO₃, Li₂SiO₃, SiO₂, TiO₂, ZrO₂, Al₂O₃, and B₂O₃.

In addition, a surface treatment may be carried out on the surfaces of electrodes including the positive electrode active material or the negative electrode active material using sulfur, phosphorous, or the like.

Furthermore, the particle surfaces of the positive electrode active material or the negative electrode active material may be treated with an actinic ray or an active gas (plasma or the like) before or after the coating of the surfaces.

### <Conductive Auxiliary Agent>

The solid electrolyte composition according to the embodiment of the present invention includes a conductive auxiliary agent. The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used.

In the present invention, in a case where the active material and the conductive auxiliary agent are used in combination, among the above-described conductive auxiliary agents, a conductive auxiliary agent that does not intercalate and deintercalate Li and does not function as an active material during charging and discharging of the battery is classified as the conductive auxiliary agent. Therefore, among the conductive auxiliary agents, a conductive auxiliary agent that can function as the active material in the active material layer during charging and discharging of the battery is classified as an active material not as a conductive auxiliary agent. Whether or not the conductive auxiliary agent functions as the active material during charging and discharging of the battery is not uniquely determined but is determined based on a combination of the conductive auxiliary agent with the active material.

As the conductive auxiliary agent, one kind may be used alone, or two or more kinds may be used in combination.

In particular, a carbon black such as acetylene black, Ketjen black, or furnace black or a carbon fiber such as vapor-grown carbon fiber or carbon nanotube is preferable.

The average particle size (volume average particle size) D_{CA} of the conductive auxiliary agent is not particularly limited as long as it satisfies the above-described particle size ratio. From the viewpoints of the formation of a conductive path and dispersibility of the solid electrolyte composition, it is preferable that the average particle size D_{CA} is set in a range where the following upper limit and the following lower limit are appropriately combined. The lower limit of the average particle size D_{CA} is preferably 0.001 µm or more, more preferably 0.01 µm or more, still more preferably 0.05 µm or more, and still more preferably 0.1 µm or more. The upper limit is preferably 20 µm or less, more preferably 5 µm or less, still more preferably 3 µm or less, still more preferably 2 µm or less, and most preferably 0.5 µm or less.

The average particle size D_{CA} of the conductive auxiliary agent is measured using the same method as that of the average particle size D_{B} of the binder resin particles. In a case where the average particle size D_{CA} is less than or equal to a measurement limit of the device, the average particle size refers to a value measured using a TEM after appropriately drying and hardening the conductive auxiliary agent.

The content of the conductive auxiliary agent in the solid electrolyte composition is preferably 0.1 to 5 mass% and more preferably 0.5 to 3 mass% with respect to 100 parts by mass of the solid content.

### <Dispersion Medium>

The solid electrolyte composition according to the embodiment of the present invention includes a dispersion medium.

The dispersion medium is not particularly limited as long as it can disperse the solid components included in the solid electrolyte composition according to the embodiment of the present invention, and examples thereof include various organic solvents. Specific examples of the dispersion medium are as follows. Examples of the organic solvent include an alcohol compound solvent, an ether compound solvent, an amide compound solvent, an amine compound solvent, a ketone compound solvent, an aromatic compound solvent, an aliphatic compound solvent, a nitrile compound solvent, and an ester compound solvent.

Examples of the alcohol compound solvent include methyl alcohol, ethyl alcohol, 1-propyl alcohol, 2-propyl alcohol, 2-butanol, ethylene glycol, propylene glycol, 1,6-hexanediol, cyclohexanediol, 1,3-butanediol, and 1,4-butanediol.

Examples of the ether compound solvent include alkylene glycols (triethylene glycol and the like), alkylene glycol monoalkyl ethers (ethylene glycol monomethyl ether and the like), alkylene glycol dialkyl ethers (ethylene glycol dimethyl ether and the like), dialkyl ethers (diisopropyl ether, dibutyl ether, and the like), and cyclic ethers (tetrahydrofuran, and dioxane (including each of 1,2-, 1,3-, and 1,4- isomers), and the like).

Examples of the amide compound solvent include N,N-dimethylformamide, N-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, and hexamethylphosphorictriamide.

Examples of the amine compound solvent include triethylamine, diisopropylethylamine, and tributylamine.

Examples of the ketone compound solvent include acetone, methyl ethyl ketone, methyl isobutyl ketone, cyclopentanone, cyclohexanone, cycloheptanone, dipropyl ketone, dibutyl ketone, diisopropyl ketone, diisobutyl ketone, isobutyl propyl ketone, sec-butyl propyl ketone, pentyl propyl ketone, and butyl propyl ketone.

Examples of the aromatic compound solvent include benzene, toluene, and xylene.

Examples of the aliphatic compound solvent include hexane, heptane, octane, decane, cyclohexane, cyclooctane, decaline, paraffin, gasoline, naphtha, kerosene, and light oil.

Examples of the nitrile compound solvent include acetonitrile, propionitrile, and isobutyronitrile.

Examples of the ester compound solvent include ethyl acetate, butyl acetate, propyl acetate, propyl butyrate, isopropyl butyrate, butyl butyrate, isobutyl butyrate, butyl pentanoate, ethyl isobutyrate, propyl isobutyrate, isopropyl isobutyrate, isobutyl isobutyrate, propyl pivalate, isopropyl pivalate, butyl pivalate, and isobutyl pivalate.

Examples of a non-aqueous dispersion medium include the aromatic compound solvent and the aliphatic compound solvent described above.

In the present invention, among these, an ether compound solvent, a ketone compound solvent, an aliphatic compound solvent, an amine compound solvent, an ester compound solvent, or a non-aqueous dispersion medium is preferable, and from the viewpoint of the dispersibility of the solid particles, a ketone compound solvent, an amine compound solvent, an ester compound solvent, or an aliphatic compound solvent is more preferable.

The number of non-aqueous dispersion media in the solid electrolyte composition may be one or two or more but is preferably two or more.

In a case where the solid electrolyte composition according to the embodiment of the present invention includes two or more dispersion media, an aspect where the dispersion media include any one of an ester compound solvent, a ketone compound solvent, or an amine compound solvent is preferable. In addition, from the viewpoint of the dispersibility of the solid particles, an aspect where two or more dispersion media selected from the group consisting of a ketone compound solvent, an amine compound solvent, an ester compound solvent, and an aliphatic compound solvent are used in combination is also preferable.

The number of carbon atoms in the dispersion medium is not particularly limited and is preferably 2 to 30, more preferably 4 to 20, still more preferably 6 to 15, and still more preferably 7 to 12. In the present invention, it is preferable that the sulfide-based inorganic solid electrolyte is used and the above-described specific organic solvent is selected. By selecting this combination, the sulfide-based inorganic solid electrolyte can be stably handled, which is preferable. In particular, a combination of the sulfide-based inorganic solid electrolyte and the aliphatic compound solvent is preferable.

The CLogP value of the dispersion medium used in the present invention is preferably 1 or higher, more preferably 2 or higher, and still more preferably 3 or higher. The upper limit is not particularly limited and is practically 10 or lower.

In the present invention, the CLogP value refers to a value obtained by calculating a common logarithm LogP of a partition coefficient P between 1-octanol and water. As a method or software used for calculating the CLogP value, a well-known one can be used. Unless specified otherwise, the CLogP value is a value calculated after drawing a structure using ChemDraw (manufactured by PerkinElmer Co., Ltd.).

For example, the CLogP values of the dispersion media described above are as follows: toluene (CLogP = 2.5), hexane (CLogP = 3.9), heptane (CLogP = 4.4), octane (CLogP = 4.9), cyclohexane (CLogP = 3.4), cyclooctane (CLogP = 4.5), decaline (CLogP = 4.8), dibutyl ketone (CLogP = 3.0), dibutyl ether (CLogP = 3.0), butyl butyrate (CLogP = 2.8), and tributylamine (CLogP = 4.8).

The content of the dispersion medium in the solid electrolyte composition is not particularly limited, but is preferably 20 to 80 mass%, more preferably 30 to 70 mass%, and particularly preferably 40 to 60 mass%.

### <Dispersant>

It is preferable that the solid electrolyte composition according to the embodiment of the present invention includes a dispersant. In a case where the content of any one of the conductive auxiliary agent, the electrode active material, or the inorganic solid electrolyte is high and/or in a case where the particle size of the electrode active material and the inorganic solid electrolyte is small such that the surface area increases, by adding the dispersant, the aggregation thereof can be further suppressed, and the active material layer can be more uniformly formed. As the dispersant, a dispersant that is generally used for an all-solid state secondary battery can be appropriately selected and used. Generally, a compound intended for particle adsorption and steric repulsion and/or electrostatic repulsion is preferably used.

### <Other Additives>

As components other than the respective components described above, the solid electrolyte composition according to the embodiment of the present invention may optionally include a lithium salt, an ionic liquid, a thickener, a crosslinking agent (an agent causing a crosslinking reaction by radical polymerization, condensation polymerization, or ring-opening polymerization), a polymerization initiator (an agent that generates an acid or a radical by heat or light), an antifoaming agent, a leveling agent, a dehydrating agent, or an antioxidant.

### [Method of manufacturing Solid Electrolyte Composition]

The solid electrolyte composition according to the embodiment of the present invention can be prepared by mixing (dispersing in the dispersion medium) the binder resin particles, the inorganic solid electrolyte, the active material, and the conductive auxiliary agent and optionally the dispersant, the above-described additives, and the like with each other in the presence of the dispersion medium. The solid electrolyte composition according to the embodiment of the present invention is preferably prepared as a slurry. In order to prepare the solid electrolyte composition according to the embodiment of the present invention, a combination of the binder resin particles, the inorganic solid electrolyte, the active material, and the conductive auxiliary agent is dispersed in the dispersion media, the combination satisfying the above-described particle size ratio. Therefore, the components can be uniformly dispersed in the dispersion medium.

The slurry of the solid electrolyte composition can be prepared by mixing the respective components described above using a variety of mixers (dispersers). The mixer is not particularly limited, and examples thereof include a ball mill, a beads mill, a planetary mixer, a blade mixer, a roll mill, a kneader, a thin-film spin system high-speed mixer, a high-speed rotary stirrer, and a disc mill. The mixing (dispersing) conditions are not particularly limited. However, in a case where a ball mill is used, the inorganic solid electrolyte and the dispersion medium are preferably mixed together at 150 to 700 rpm (rotation per minute) for 1 to 24 hours. Two dispersers may be used in two or more steps.

In the present invention, the mixing order of the respective components are not particularly limited, and the components may be mixed at once or sequentially. For example, the binder resin particles or the dispersant may be mixed with the dispersion medium alone or together with the inorganic solid electrolyte. The active material may be mixed with the dispersion medium alone or together with the binder resin particles and the inorganic solid electrolyte.

The conductive auxiliary agent may be mixed in the form of particles without any change but is preferably mixed in the form of a dispersion liquid in which the conductive auxiliary agent is dispersed in the dispersion medium in advance. As a result, secondary aggregation of the conductive auxiliary agent can be prevented, and the particle size can be controlled. In addition, the conductive auxiliary agent can be uniformly dispersed in the presence of the binder resin particles, the inorganic solid electrolyte, and the active material. A method of preparing the dispersion liquid of the conductive auxiliary agent is not particularly limited. For example, a dispersion method using the above-described disperser can be used. In addition, the concentration of solid contents in the dispersion liquid of the conductive auxiliary agent is not particularly limited and can be appropriately set.

The solid electrolyte composition according to the embodiment of the present invention is preferably used as a material for forming a solid electrolyte-containing sheet and a material for forming an active material layer of an all-solid state secondary battery, the solid electrolyte-containing sheet being preferably used for an all-solid state secondary battery.

### [Solid Electrolyte-Containing Sheet]

The solid electrolyte-containing sheet according to the embodiment of the present invention is a sheet-shaped molded body and includes binder particles, an inorganic solid electrolyte, an active material, and a conductive auxiliary agent. The solid electrolyte-containing sheet includes an aspect where the binder particles, the inorganic solid electrolyte, the active material, and the conductive auxiliary agent maintain a particle shape and satisfy the above-described particle size ratio and an aspect described below where the particle shape is lost. It is preferable that the solid electrolyte-containing sheet according to the embodiment of the present invention is formed using the solid electrolyte composition according to the embodiment of the present invention. Examples of the solid electrolyte-containing sheet include a sheet including an active material layer that is formed of the solid electrolyte composition.

In the solid electrolyte-containing sheet according to the embodiment of the present invention, the interface resistance between the solid particles is low, and the solid particles are strongly bonded to each other. Therefore, by using the solid electrolyte-containing sheet according to the embodiment of the present invention as a material for forming an active material layer of an all-solid state secondary battery, low electrical resistance and properties of maintaining excellent battery performance can be imparted to the all-solid state secondary battery.

The above-described particle size ratio in the solid electrolyte-containing sheet (active material layer) can be obtained as follows. After disassembling the active material layer of the solid electrolyte-containing sheet or the battery to peel off an electrode and subsequently performing the measurement on an electrode material of the electrode, the above-described particle size ratio can be obtained. The measurement can be performed, for example, using a method of analyzing an image by scanning electron microscope/energy dispersive X-ray spectroscopy (SEM/EDX) to measure an average particle size of each of materials.

In the solid electrolyte-containing sheet according to the embodiment of the present invention, the binder resin particles, the inorganic solid electrolyte, the active material, and the conductive auxiliary agent are present in a state where they are bonded or adhered to each other. For example, as one configuration, an aspect of the binder resin particles, the inorganic solid electrolyte, and the active material are strongly bonded to each other and the conductive auxiliary agents are adhered to each other between the bonded materials to form a conductive path can be adopted. The bonded or adhered state can be achieved using a method of manufacturing a solid electrolyte-containing sheet according to the embodiment of the present invention.

The solid electrolyte-containing sheet according to the embodiment of the present invention is preferably obtained by pressure forming. In this case, in the solid electrolyte-containing sheet, the particle shape of the solid particles, for example, the inorganic solid electrolyte may be maintained or lost by pressure. As described above, the solid electrolyte composition according to the embodiment of the present invention, the solid particles are highly dispersive. Therefore, by forming a film of the solid electrolyte composition, a contact state and a binding state between the solid particles where the interface resistance is low and strong binding properties are exhibited can be realized.

The solid electrolyte-containing sheet may include a dispersant and the above-described additives appropriately. The contents of the respective components in the solid electrolyte-containing sheet (active material layer) according to the embodiment of the present invention are not particularly limited, but are preferably the same as the contents of the respective components with respect to the solid content of the solid electrolyte composition according to the embodiment of the present invention.

The solid electrolyte-containing sheet according to the embodiment of the present invention may include other members such as a substrate or a release sheet.

The solid electrolyte-containing sheet can be suitably used in an all-solid state secondary battery and includes various aspects depending on the uses. Examples of the aspects include a sheet (electrode sheet for an all-solid state secondary battery) that is preferably used for the active material layer or a laminate of the active material layer and the solid electrolyte layer.

The electrode sheet for an all-solid state secondary battery (also simply referred to as "the electrode sheet") is a sheet that is preferably used to form the active material layer or a laminate of the solid electrolyte layer and the active material layer in the all-solid state secondary battery according to the embodiment of the present invention and is an electrode sheet in which at least the active material layer is appropriately provided on a metal foil as a current collector described below. The electrode sheet is typically a sheet including the current collector and the active material layer, and examples of an aspect thereof include an aspect including the current collector, the active material layer, and the solid electrolyte layer in this order and an aspect including the current collector, the active material layer, the solid electrolyte layer, and the active material layer in this order.

The electrode sheet may include other layers such as a substrate (other than a current collector), a protective layer (release sheet), a current collector, or a coating layer. The substrate is not particularly limited as long as it can support the active material layer, and examples thereof include a sheet body (plate-shaped body) formed of a materials, an organic material or an inorganic material. Examples of the organic materials include various polymers, and specific examples thereof include polyethylene terephthalate, polypropylene, polyethylene, and cellulose. Examples of the inorganic materials include glass and ceramic.

The thickness of each of the layers forming the electrode sheet is the same as the thickness of each of the layers described below regarding the all-solid state secondary battery according to the embodiment of the present invention.

### [Manufacturing of Solid Electrolyte-Containing Sheet]

A method of manufacturing a solid electrolyte-containing sheet according to the embodiment of the present invention is not particularly limited, and examples thereof include a method including forming a film (applying and drying) of the solid electrolyte composition according to the embodiment of the present invention to the substrate or the current collector (other layers may be interposed therebetween) to form the active material layer (applied and dried layer) on the substrate or the current collector. As a result, the solid electrolyte-containing sheet including the substrate or the current collector and the applied and dried layer can be prepared. Here, the applied and dried layer refers to a layer formed by applying the solid electrolyte composition according to the embodiment of the present invention and drying the dispersion medium (that is, a layer formed using the solid electrolyte composition according to the embodiment of the present invention and made of a composition obtained by removing the dispersion medium from the solid electrolyte composition according to the embodiment of the present invention). Within a range where the effects of the present invention do not deteriorate, the applied and dried layer may include the dispersion medium even after drying. For example, 1 mass% or lower of the dispersion medium with respect to the total mass of the applied and dried layer may be included (remain).

Each of steps of application, drying, or the like in the method of manufacturing a solid electrolyte-containing sheet according to the embodiment of the present invention will be described below regarding a method of manufacturing an all-solid state secondary battery.

In the method of manufacturing a solid electrolyte-containing sheet according to the embodiment of the present invention, it is also possible to pressurize the applied and dried layer obtained as described above. Pressurization conditions or the like will be described below regarding the method of manufacturing an all-solid state secondary battery.

In addition, in the method of manufacturing a solid electrolyte-containing sheet according to the embodiment of the present invention, it is also possible to peel the substrate, the protective layer (particularly, the release sheet), or the like.

### [All-Solid State Secondary Battery]

The all-solid state secondary battery according to the embodiment of the present invention includes a positive electrode active material layer, a negative electrode active material layer opposite to the positive electrode active material layer, and a solid electrolyte layer disposed between the positive electrode active material layer and the negative electrode active material layer. At least one of the positive electrode active material layer or the negative electrode active material layer is a layer formed of the solid electrolyte composition according to the embodiment of the present invention (layer formed using this composition) and, for example, includes the binder resin particles, the inorganic solid electrolyte, and the conductive auxiliary agent that satisfy the above-described particle size ratio. In the all-solid state secondary battery according to the embodiment of the present invention including the active material layer, the electrical resistance is low, and excellent battery performance can be maintained.

The above-described particle size ratio in the active material layer can be obtained as follows.

After disassembling the all-solid state secondary battery to peel off and extract the active material layer, the measurement can be performed on the active material layer using the same method as that of the above-described solid electrolyte-containing sheet.

(Positive Electrode Active Material Layer, Solid Electrolyte Layer, and Negative Electrode Active Material Layer)

In the all-solid state secondary battery according to the embodiment of the present invention, as described above, at least one of the positive electrode active material layer or the negative electrode active material layer is preferably formed of the solid electrolyte composition according to the embodiment of the present invention or the solid electrolyte-containing sheet according to the embodiment of the present invention. Both the positive electrode active material layer and the negative electrode active material layer may also be formed of the solid electrolyte composition or the solid electrolyte-containing sheet according to the embodiment of the present invention. In the positive electrode active material layer and the negative electrode active material layer formed of the solid electrolyte composition or the like according to the embodiment of the present invention, unless specified otherwise, the contents and the particle size ratio of the respective components are the same as those of the solid content of the solid electrolyte composition or the solid electrolyte-containing sheet.

Typically, the solid electrolyte layer may be formed of the solid electrolyte composition or the solid electrolyte-containing sheet not including the active material and further the conductive auxiliary agent. Examples of the solid electrolyte composition (solid electrolyte layer-forming composition) not including the active material and the conductive auxiliary agent include the solid electrolyte composition according to the embodiment of the present invention not including the active material and the conductive auxiliary agent (the particle size ratio between the binder resin particles and the inorganic solid electrolyte is not particularly limited) and a well-known solid electrolyte composition. Unless specified otherwise, it is preferable that the respective components in the solid electrolyte layer and the contents thereof are the same as those in the solid content of the solid electrolyte composition or the solid electrolyte-containing sheet.

The thicknesses of the negative electrode active material layer, the solid electrolyte layer, and the positive electrode active material layer are not particularly limited respectively. In consideration of the dimension of a general all-solid state secondary battery, each of the thicknesses of the respective layers is preferably 10 to 1,000 µm and more preferably 20 µm or more and less than 500 µm. In the all-solid state secondary battery according to the embodiment of the present invention, the thickness of at least one layer of the positive electrode active material layer or the negative electrode active material layer is still more preferably 50 µm or more and less than 500 µm.

Each of the positive electrode active material layer and the negative electrode active material layer may include the current collector opposite to the solid electrolyte layer.

### (Case)

Depending on uses, the all-solid state secondary battery according to the embodiment of the present invention may be used as the all-solid state secondary battery having the above-described structure as it is but is preferably sealed in an appropriate case to be used in the form of a dry cell. The case may be a metallic case or a resin (plastic) case. In a case where a metallic case is used, examples thereof include an aluminum alloy case and a stainless steel case. It is preferable that the metallic case is classified into a positive electrode-side case and a negative electrode-side case and that the positive electrode-side case and the negative electrode-side case are electrically connected to the positive electrode current collector and the negative electrode current collector, respectively. The positive electrode-side case and the negative electrode-side case are preferably integrated by being joined together through a gasket for short circuit prevention.

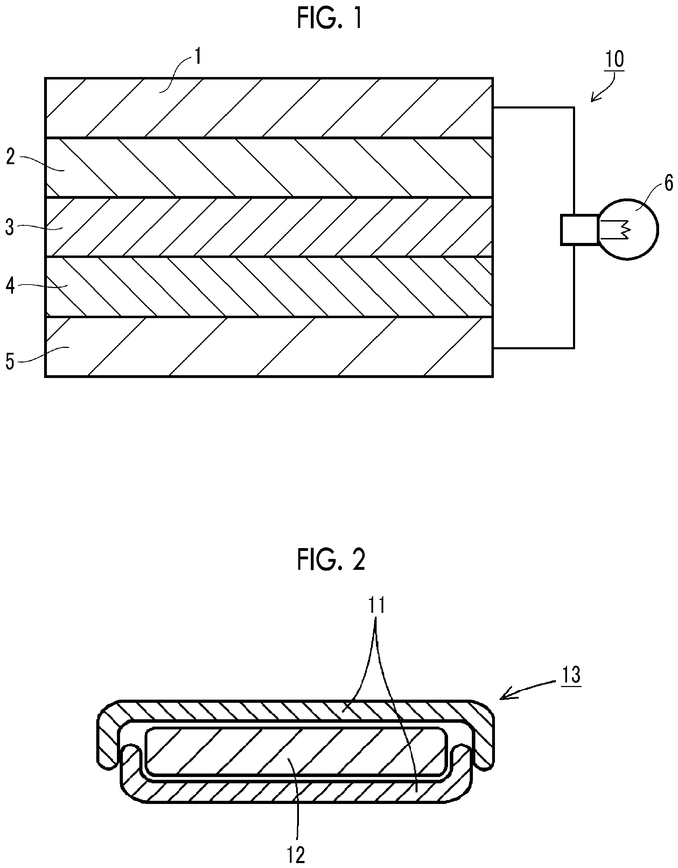

Hereinafter, an all-solid state secondary battery according to a preferred embodiment of the present invention will be described with reference to Fig. 1, but the present invention is not limited thereto.

Fig. 1 is a cross-sectional view schematically illustrating the all-solid state secondary battery (lithium ion secondary battery) according to the preferred embodiment of the present invention. In the case of being seen from the negative electrode side, an all-solid state secondary battery 10 of the present embodiment includes a negative electrode current collector 1, a negative electrode active material layer 2, a solid electrolyte layer 3, a positive electrode active material layer 4, and a positive electrode current collector 5 in this order. The respective layers are in contact with one another and have a laminated structure. In a case in which the above-described structure is employed, during charging, electrons (e⁻) are supplied to the negative electrode side, and lithium ions (Li⁺) are stored in the negative electrode side. On the other hand, during discharging, the lithium ions (Li⁺) stored in the negative electrode side return to the positive electrode, and electrons are supplied to an operation portion 6. In an example illustrated in the drawing, an electric bulb is employed as the operation portion 6 and is lit by discharging.

The solid electrolyte composition according to the embodiment of the present invention can be preferably used as a material forming the active material layer, in particular, as a material forming the positive electrode active material layer. In addition, the solid electrolyte-containing sheet according to the embodiment of the present invention is suitable as the negative electrode active material layer and the positive electrode active material layer.

In the present specification, the positive electrode active material layer and the negative electrode active material layer will be collectively referred to as the active material layer.

In a case where the all-solid state secondary battery having a layer configuration illustrated in Fig. 1 is put into a 2032-type coin case, the all-solid state secondary battery will be referred to as "electrode sheet for an all-solid state secondary battery", and a battery prepared by putting this electrode sheet for an all-solid state secondary battery into a 2032-type coin case will be referred to as "all-solid state secondary battery", thereby referring to both batteries distinctively in some cases.

(Positive Electrode Active Material Layer, Solid Electrolyte Layer, and Negative Electrode Active Material Layer)

In the all-solid state secondary battery 10, any one of the positive electrode active material layer 4 or the negative electrode active material layer 2 is formed using the solid electrolyte composition according to the embodiment of the present invention or the solid electrolyte-containing sheet according to the embodiment of the present invention. In the all-solid state secondary battery, the electrical resistance is low, and excellent battery performance can be maintained. The solid electrolyte layer 3 can be formed of the above-described solid electrolyte layer-forming composition.

The respective components included in the positive electrode active material layer 4, the solid electrolyte layer 3, and the negative electrode active material layer 2 may be the same as or different from each other.

In the all-solid state secondary battery 10, the negative electrode active material layer can be formed as a lithium metal layer. Examples of the lithium metal layer include a layer formed by deposition or forming of lithium metal powder, a lithium foil, and a lithium deposited film. The thickness of the lithium metal layer is not limited to the above-described thickness of the above-described negative electrode active material layer and may be, for example, 1 to 500 µm.

The positive electrode current collector 5 and the negative electrode current collector 1 are preferably an electron conductor.

In the present invention, either or both of the positive electrode current collector and the negative electrode current collector will also be simply referred to as the current collector.

As a material forming the positive electrode current collector, not only aluminum, an aluminum alloy, stainless steel, nickel, or titanium but also a material (a material on which a thin film is formed) obtained by treating the surface of aluminum or stainless steel with carbon, nickel, titanium, or silver is preferable. Among these, aluminum or an aluminum alloy is more preferable.

As a material forming the negative electrode current collector, not only aluminum, copper, a copper alloy, stainless steel, nickel, or titanium but also a material obtained by treating the surface of aluminum, copper, a copper alloy, or stainless steel with carbon, nickel, titanium, or silver is preferable, and aluminum, copper, a copper alloy, or stainless steel is more preferable.

Regarding the shape of the current collector, typically, current collectors having a film sheet-like shape are used, but it is also possible to use net-shaped collectors, punched collectors, compacts of lath bodies, porous bodies, foaming bodies, or fiber groups, and the like.

The thickness of the current collector is not particularly limited, but is preferably 1 to 500 µm. In addition, it is also preferable that the surface of the current collector is made to be uneven through a surface treatment.

In the present invention, a functional layer, a member, or the like may be appropriately interposed or disposed between the respective layers of the negative electrode current collector, the negative electrode active material layer, the solid electrolyte layer, the positive electrode active material layer, and the positive electrode current collector or on the outside thereof. In addition, each of the layers may have a single-layer structure or a multi-layer structure.

### [Method of Manufacturing All-Solid State Secondary Battery]

The all-solid state secondary battery can be manufactured using an ordinary method. Specifically, the all-solid state secondary battery can be manufactured by forming the respective layers using the solid electrolyte composition according to the embodiment of the present invention and the like. As a result, the all-solid state secondary battery in which the electrical resistance is low and excellent battery performance can be maintained can be manufactured. Hereinafter, the details will be described in detail.

The all-solid state secondary battery according to the embodiment of the present invention can be manufactured through a method (the method of manufacturing a solid electrolyte-containing sheet according to the embodiment of the present invention) including (through) a step of applying (forming a film of) the solid electrolyte composition according to the embodiment of the present invention to the substrate (for example, the metal foil as the current collector) to form a coating film.

For example, the solid electrolyte composition including the positive electrode active material is applied as a positive electrode composition to a metal foil which is a positive electrode current collector so as to form a positive electrode active material layer. As a result, a positive electrode sheet for an all-solid state secondary battery is prepared. Next, the solid electrolyte layer-forming composition for forming a solid electrolyte layer is applied to the positive electrode active material layer so as to form the solid electrolyte layer. Furthermore, the solid electrolyte composition including the negative electrode active material is applied as the negative electrode composition to the solid electrolyte layer so as to form a negative electrode active material layer. By laminating the negative electrode current collector (metal foil) on the negative electrode active material layer, an all-solid state secondary battery having a structure in which the solid electrolyte layer is interposed between the positive electrode active material layer and the negative electrode active material layer can be obtained. By sealing the laminate in a case, a desired all-solid state secondary battery can also be obtained.

In addition, an all-solid state secondary battery can also be manufactured by forming the negative electrode active material layer, the solid electrolyte layer, and the positive electrode active material layer on the negative electrode current collector in order reverse to that of the method of forming the respective layers and laminating the positive electrode current collector thereon.

As another method, for example, the following method can be used. That is, the positive electrode sheet for an all-solid state secondary battery is prepared as described above. In addition, the solid electrolyte composition including the negative electrode active material is applied as a negative electrode composition to a metal foil which is a negative electrode current collector so as to form a negative electrode active material layer. As a result, a negative electrode sheet for an all-solid state secondary battery is prepared. Next, the solid electrolyte layer is formed on the active material layer in any one of the sheets as described above. Furthermore, the other one of the positive electrode sheet for an all-solid state secondary battery and the negative electrode sheet for an all-solid state secondary battery is laminated on the solid electrolyte layer such that the solid electrolyte layer and the active material layer come into contact with each other. This way, an all-solid state secondary battery can be manufactured.

As still another method, for example, the following method can be used. That is, the positive electrode sheet for an all-solid state secondary battery and the negative electrode sheet for an all-solid state secondary battery are produced as described above. In addition, separately from the electrode sheets, the solid electrolyte layer-forming composition is applied to a substrate to prepare a solid electrolyte-containing sheet for an all-solid state secondary battery including the solid electrolyte layer. Furthermore, the positive electrode sheet for an all-solid state secondary battery and the negative electrode sheet for an all-solid state secondary battery are laminated such that the solid electrolyte layer removed from the substrate is interposed therebetween. This way, an all-solid state secondary battery can be manufactured.

An all-solid state secondary battery can also be manufactured by combining the above-described forming methods. For example, the positive electrode sheet for an all-solid state secondary battery, the negative electrode sheet for an all-solid state secondary battery, and the solid electrolyte-containing sheet for an all-solid state secondary battery are prepared respectively. Next, the solid electrolyte layer removed from the substrate is laminated on the negative electrode sheet for an all-solid state secondary battery, and the positive electrode sheet for an all-solid state secondary battery is bonded thereto. As a result, an all-solid state secondary battery can be manufactured. In this method, it is also possible to laminate the solid electrolyte layer on the positive electrode sheet for an all-solid state secondary battery and to bond the solid electrolyte layer to the negative electrode sheet for an all-solid state secondary battery.

### <Formation of Respective layers (Film Formation)>

A method of applying the solid electrolyte composition, the solid electrolyte layer-forming composition, or the like is not particularly limited and can be appropriately selected. Examples thereof include coating (preferably wet-type coating), spray coating, spin coating, dip coating, slit coating, stripe coating, and bar coating.

At this time, the solid electrolyte composition or the like may be dried after being applied each time or may be dried after being applied multiple times. The drying temperature is not particularly limited. The lower limit is preferably 30°C or higher, more preferably 60°C or higher, and still more preferably 80°C or higher. The upper limit is preferably 300°C or lower, more preferably 250°C or lower, and still more preferably 200°C or lower. In a case where the solid electrolyte composition is heated in the above-described temperature range, the dispersion medium can be removed to make the composition enter a solid state (applied and dried layer). In addition, the temperature is not excessively increased, and the respective members of the all-solid state secondary battery are not impaired, which is preferable. Therefore, in the all-solid state secondary battery, excellent total performance can be exhibited, and excellent binding properties can be obtained.

As described above, in a case where the solid electrolyte composition according to the embodiment of the present invention is applied and dried, the applied and dried layer in which the interface resistance between the solid particles is low and the solid particles are strongly bonded to each other can be formed.

After the application of the solid electrolyte composition or the like or after the preparation of the all-solid state secondary battery, the respective layers or the all-solid state secondary battery is preferably pressurized. In addition, the respective layers are also preferably pressurized in a state where they are laminated. Examples of the pressurization method include a method using a hydraulic cylinder pressing machine. A pressure is not particularly limited and may be a pressure at which the particle shape of the above-described components, for example, the inorganic solid electrolyte is lost. As described above, the above-described contact state and binding state of the solid particles can be realized by forming a film of the solid electrolyte composition according to the embodiment of the present invention and do not significantly deteriorate even after a pressure is applied thereto. For example, the pressure is preferably in a range of 50 to 1500 MPa.

In addition, the applied solid electrolyte composition may be heated while being pressurized. The heating temperature is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which a coating solvent or the dispersion medium has been dried in advance or in a state in which a coating solvent or the dispersion medium remains.

The respective compositions may be applied at the same time, and the application, the drying, and the pressing may be carried out simultaneously and/or sequentially. The respective compositions may be applied to separate substrates and then laminated by transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the solid electrolyte-containing sheet, for example, the all-solid state secondary battery, it is also possible to use a restraining device (screw fastening pressure or the like) of the all-solid state secondary battery in order to continuously apply an intermediate pressure.

The pressing pressure may be uniform or variable with respect to a pressed portion such as a sheet surface.

The pressing pressure may be variable depending on the area or the thickness of the pressed portion. In addition, the pressure may also be variable stepwise for the same portion.

A pressing surface may be smooth or roughened.

### <Initialization>

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

### [Usages of All-Solid State Secondary Battery]

The all-solid state secondary battery according to the embodiment of the present invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, and memory cards. Additionally, examples of consumer usages include automobiles (electric cars and the like), electric vehicles, motors, lighting equipment, toys, game devices, road conditioners, watches, strobes, cameras, medical devices (pacemakers, hearing aids, and shoulder massage devices, and the like). Furthermore, the all-solid state secondary battery can be used for a variety of military usages and universe usages. In addition, the all-solid state secondary battery can also be combined with solar batteries.

### Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "-" used in tables represents that the corresponding exemplary component is not included or the corresponding numerical value is zero or incomputable.

### Example 1

In this example, a positive electrode composition, a positive electrode sheet for an all-solid state secondary battery, and an all-solid state secondary battery were prepared or manufactured by using a sulfide-based inorganic solid electrolyte as an inorganic solid electrolyte, and characteristics thereof were evaluated.

### 1. Preparation of Binder Resin Particle Dispersion Liquid

### <Synthesis of Binder Resin Particles B-1 (Preparation of Binder Resin Particle B-1 Dispersion Liquid)>

200 g of heptane was added to a 1 L three-neck flask equipped with a reflux cooling pipe and a gas introduction coke, nitrogen gas was introduced at a flow rate of 200 mL/min for 10 minutes, and the solution was heated to 80°C. A liquid (a solution in which 140 g of ethyl acrylate (manufactured by Wako Pure Chemical Industries, Ltd.), 20 g of acrylic acid (manufactured by Wako Pure Chemical Industries, Ltd.), 40 g (solid content) of a macromonomer AB-6 (manufactured by Toagosei Co., Ltd.), and 2.0 g of a polymerization initiator V-601 (trade name, manufactured by Wako Pure Chemical Industries, Ltd.) were mixed with each other) prepared in a separate container was added dropwise to the solution for 2 hours and was stirred at 80°C for 2 hours. Next, 1.0 g of V-601 was further added to the obtained mixture, and the solution was stirred at 90°C for 2 hours. By diluting the obtained solution with heptane, a dispersion liquid of binder resin particles B-1 formed of an acrylic resin was obtained.

The macromonomer AB-6 is polybutyl acrylate (number-average molecular weight: 6000) in which a terminal functional group is a methacryloyl group.

### <Synthesis of Binder Resin Particles B-2 (Preparation of Binder Resin Particle B-2 Dispersion Liquid)>

In order to synthesize a polyurethane resin, first, terminated diol dodecyl polymethacrylate was synthesized.

Specifically, 20 mL of methyl ethyl ketone was added to a 500 mL three-neck flask and was heated at 75°C in a nitrogen stream. On the other hand, 70 g of dodecyl methacrylate (manufactured by Wako Pure Chemical Industries, Ltd.) and 110 g of methyl ethyl ketone were added to a 500 mL measuring cylinder and were stirred for 10 minutes. 2. 9 g of thioglycerol (manufactured by Wako Pure Chemical Industries, Ltd.) as a chain transfer agent and 3.2 g of a radical polymerization initiator V-601 (trade name, manufactured by Wako Pure Chemical Industries, Ltd.) were added to the measuring cylinder, and the solution was further stirred for 10 minutes. The obtained monomer solution was added dropwise to the 500 mL three-neck flask for 2 hours, and radical polymerization was caused to start. Further, after completion of the dropwise addition, heating and stirring were continued at 75°C for 6 hours. The obtained polymer solution was concentrated under reduced pressure, methyl ethyl ketone was removed by distillation, and the obtained solid matter was dissolved in heptane. As a result, 292 go of a 25 mass% heptane solution of terminated diol-modified dodecyl polymethacrylate was obtained. The weight-average molecular weight of the obtained polymer was 3200.

Next, polyurea colloidal particles MM-1 were synthesized.

Specifically, 260 g of the 25 mass% heptane solution of the terminated diol-modified dodecyl polymethacrylate was added to a 1 L three-neck flask and was diluted with 110 g of heptane. 11.1 g of isophorone diisocyanate (manufactured by Wako Pure Chemical Industries, Ltd.) and 0.1 g of NEOSTANN U-600 (trade name, manufactured by Nitto Kasei Co., Ltd.) were added to the solution, and the obtained solution was heated and stirred at 75°C for 5 hours. Next, a dilute solution obtained by diluting 0.4 g of isophorone diamine (amine compound) with 12.5 g of heptane was added dropwise for 1 hour. 10 minutes after the start of the dropwise addition, the polymer solution having a transparent color was changed into a solution having a light yellow fluorescent color. The formation of urea colloid was verified from the change. The reaction solution was cooled to a room temperature, and 506 g of 15 mass% heptane of polyurea colloidal particles MM-1 was obtained.

The weight-average molecular weight of polyurea in the polyurea colloidal particles MM-3 was 9,600.

Next, a polyurethane resin was synthesized using the polyurea colloidal particle MM-3.

Specifically, 3.2 g of m-phenylene diisocyanate (manufactured by Tokyo Chemical Industry Co., Ltd.) and 8.0 g of polyethylene glycol (weight-average molecular weight: 400, manufactured by Aldrich) were added to a 50 mL sample bottle. 60.0 g of the 15 mass% heptane solution of polyurea colloidal particles MM-1 was added to the sample bottle and was dispersed using a homogenizer for 30 minutes while heating the sample bottle at 50°C. During that time, the mixed solution was atomized to form a light orange slurry. The obtained slurry was put into a 200 mL three-neck flask heated to a temperature 80°C in advance, 0.1 g of NEOSTANN U-600 (trade name, manufactured by Nitto Kasei Co., Ltd.) was added thereto, the obtained solution was heated and stirred at a temperature of 80°C and a rotation speed of 400 rpm for 3 hours. The slurry was in the form of a white emulsion. It was estimated from the result that binder resin particles formed of a polyurethane resin were formed. The white emulsion slurry was cooled, a heptane dispersion liquid of binder resin particles B-2 formed of a polyurethane resin was obtained.

### <Preparation of Binder Resin Particles B-3 Dispersion Liquid>

Particles (Microdispers-200 (trade name), manufactured by Polysciences Inc.) of a fluorine-containing resin (polytetrafluoroethylene) were dispersed by using heptane as a dispersion medium to prepare a dispersion liquid of binder resin particles B-3.

### <Synthesis of Binder resin particles BC-1 for Comparison (Preparation of Latex of Binder Resin Particles BC-1)>

200 parts by mass of methyl methacrylate, 50 parts by mass of styrene, 5 parts by mass of divinylbenzene, 4 parts by mass of sodium dodecylbenzene sulfonate, 400 parts by mass of ion exchange water, and 10 parts by mass of 2,2'-azobisisobutyronitrile as a polymerization initiator were put into an autoclave and were stirred for 10 minutes. Next, the solution was heated to 80°C, and polymerization was performed for 1 hour.

400 parts by mass of nonylphenoxypolyethylene glycol acrylate (FANCRYL FA-314a (trade name), functional acrylate, manufactured by Hitachi Chemical Co., Ltd.), 100 parts by mass of styrene, 800 parts by mass of ion exchange water, and 10 parts by mass of azobisbutyronitrile as a polymerization initiator were added to the obtained polymer, were sufficiently mixed, and were polymerized at 80°CJ for 4 hours. The reaction solution was cooled, and a polymerization reaction was stopped. 15000 parts by mass of decaline was added to the obtained dispersion liquid, and the solution was dried under reduced pressure to remove moisture. As a result, a latex of binder resin particles BC-1 was obtained.

Regarding each of the binder resin particle dispersion liquid, the average particle size D_{B} of the binder resin particles and the weight-average molecular weight of the polymer forming the binder resin particles were measured using the above-described method. The results are shown in Table 1.

### 2. Synthesis of Sulfide-based Inorganic Solid Electrolyte and Adjustment of Average Particle Size

### <Synthesis of Sulfide-Based Inorganic Solid Electrolyte:Li-P-S-Based Glass>

### -Synthesis of Li-P-S-Based Glass having Average Particle Size D_{SE} of 20 µm-

As a sulfide-based inorganic solid electrolyte, Li-P-S-based glass was synthesized with reference to a non-patent document of T. Ohtomo, A. Hayashi, M. Tatsumisago, Y. Tsuchida, S. Hama, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a glove box under an argon atmosphere (dew point: -70°C), lithium sulfide (Li₂S, manufactured by Aldrich-Sigma, Co. LLC. Purity: >99.98%) (2.42 g) and diphosphoruspentasulfide (P₂S₅, manufactured by Aldrich-Sigma, Co. LLC. Purity: >99%) (3.90 g) were respectively weighed, put into an agate mortar, and mixed using an agate muddler for five minutes. The mixing ratio between Li₂S and P₂S₅ (Li₂S:P₂S₅) was set to 75:25 in terms of molar ratio.

66 g of zirconia beads having a diameter of 5 mm were put into a 45 mL zirconia container (manufactured by Fritsch Japan Co., Ltd.), the full amount of the mixture was put thereinto, and the container was sealed in an argon atmosphere. The container was set in a planetary ball mill P-7 (trade name) manufactured by Fritsch Japan Co., Ltd., mechanical milling was carried out at 25°C and a rotation speed of 510 rpm for 20 hours, and a yellow powder (6.20 g) of a sulfide-based inorganic solid electrolyte (Li-P-S-based glass, LPS) was obtained. The volume average particle size D_{SE} of LPS measured using the above-described measurement method was 20 µm

### -Synthesis of Li-P-S-Based Glass having Average Particle Size D_{SE} of 35 µm-

In a glove box under an argon atmosphere (dew point: -70°C), lithium sulfide (Li₂S, manufactured by Aldrich-Sigma, Co. LLC. Purity: >99.98%) (2.42 g) and diphosphoruspentasulfide (P₂S₅, manufactured by Aldrich-Sigma, Co. LLC. Purity: >99%) (3.90 g) were respectively weighed, put into an agate mortar, and mixed using an agate muddler for five minutes. The mixing ratio between Li₂S and P₂S₅ (Li₂S:P₂S₅) was set to 75:25 in terms of molar ratio.

66 g of zirconia beads having a diameter of 5 mm were put into a 45 mL zirconia container (manufactured by Fritsch Japan Co., Ltd.), the full amount of the mixture was put thereinto, and the container was sealed in an argon atmosphere. The container was set in a planetary ball mill P-7 (trade name) manufactured by Fritsch Japan Co., Ltd., mechanical milling was carried out at 25°C and a rotation speed of 450 rpm for 15 hours, and a yellow powder (6.20 g) of a sulfide-based inorganic solid electrolyte (Li-P-S-based glass, LPS) was obtained. The volume average particle size D_{SE} of LPS measured using the above-described measurement method was 35 µm

### <Adjustment of Average Particle Size>

The average particle size of the synthesized sulfide-based inorganic solid electrolyte was adjusted as follows.

### -LPS of Average Particle Size D_{SE} of 2 µm-

180 zirconia beads having a diameter of 5 mm were put into a 45 mL zirconia container (manufactured by Fritsch Japan Co., Ltd.), 5 g of LPS having D_{SE} of 20 µm synthesized as described above and 16.0 g of butyl butyrate were put thereinto, and the solution was dispersed at 500 rpm for 3 hours and was dried in a nitrogen atmosphere at 150°C for 4 hours. LPS having an average particle size D_{SE} of 2 µm was obtained.

### -LPS of Average Particle Size D_{SE} of 5 µm-

LPS having an average particle size D_{SE} of 5 µm was obtained using the same method as that of LPS having an average particle size D_{SE} of 2 µm, except that the rotation speed was changed to 300 rpm and the dispersion time was changed to 1 hour.

### -LPS of Average Particle Size D_{SE} of 18 µm-

LPS having an average particle size D_{SE} of 18 µm was obtained using the same method as that of LPS having an average particle size D_{SE} of 2 µm, except that the rotation speed was changed to 200 rpm and the dispersion time was changed to 10 minutes.

### 3. Preparation of Solid Electrolyte Layer-Forming Composition

### <Preparation of Solid Electrolyte Layer-Forming Composition S-1>

180 zirconia beads having a diameter of 5 mm were put into a 45 mL zirconia container (manufactured by Fritsch Japan Co., Ltd.), and 4.85 g of LPS having D_{SE} of 20 µm synthesized as described above, a dispersion liquid of binder resin particles B-1 (0.15 g in terms of solid content mass), and 16.0 g of heptane were put thereinto. Next, the container was set in a planetary ball mill P-7 (trade name, manufactured by Fritsch Japan Co., Ltd.) and the components were continuously mixed for 10 minutes at a temperature of 25°C and a rotation speed of 150 rpm. As a result, a solid electrolyte layer-forming composition S-1 was obtained.

### 4. Preparation of Positive Electrode Composition

### <Preparation of Positive Electrode Composition U-1>

### -Preparation of Vapor-Grown Carbon Fiber (VGCF) Dispersion-

180 zirconia beads having a diameter of 5 mm were put into a 45 mL zirconia container (manufactured by Fritsch Japan Co., Ltd.), and 27 g of butyl butyrate and 3 g of VGCF (VGCF-H (trade name) manufactured by Showa Denko K.K.) were added. The container was set in a planetary ball mill P-7 (trade name, manufactured by Fritsch Japan Co., Ltd.) and the components were continuously mixed together for 120 minutes at 25°C and a rotation speed of 500 rpm. As a result, a dispersion liquid of VGCF having an average particle size D_{CA} of 0.6 µm measured using the above-described measurement method was obtained.

### -Preparation of Positive Electrode Composition U-1-

180 zirconia beads having a diameter of 5 mm were put into a 45 mL zirconia container (manufactured by Fritsch Japan Co., Ltd.), and 2.8 g of LPS having D_{SE} of 2 µm, a dispersion liquid of binder resin particles B-1 (0.2 g in terms of solid content mass), and 22 g of heptane were put thereinto. The container was set in a planetary ball mill P-7 (trade name, manufactured by Fritsch Japan Co., Ltd.) and the components were stirred for 10 minutes at 25°C and a rotation speed of 150 rpm. Next, the dispersion liquid of VGCF (0.1 g in terms of solid content mass) was added, and 6.9 g of LiNi_{1/3}Co_{1/3}Mn_{1/3}O₂ as an active material (average particle size D_{CA} measured using the above-described measurement method: 4 µm, specific surface area S_{AM}: 0.1 m²/g) was put thereinto. Next, using the same method, the container was set in a planetary ball mill P-7 and the components were continuously mixed together for 5 minutes at 25°C and a rotation speed of 100 rpm. As a result, a positive electrode composition U-1 was prepared.

### <Preparation of Positive Electrode Composition U-2>

### -Preparation of Acetylene Black (AB) Dispersion-

180 zirconia beads having a diameter of 5 mm were put into a 45 mL zirconia container (manufactured by Fritsch Japan Co., Ltd.), and 27 g of butyl butyrate and 3 g of acetylene black (DENKA BLACK (trade name) manufactured by Denka Co., Ltd.) were added. Next, the container was set in a planetary ball mill P-7 (trade name, manufactured by Fritsch Japan Co., Ltd.) and the components were mixed together for 120 minutes at 25°C and a rotation speed of 500 rpm. As a result, a dispersion liquid of acetylene black having an average particle size of 0.3 µm measured using the above-described measurement method was obtained.

### -Preparation of Positive Electrode Composition U-2-

180 zirconia beads having a diameter of 5 mm were put into a 45 mL zirconia container (manufactured by Fritsch Japan Co., Ltd.), and 2.8 g of LPS having D_{SE} of 2 µm, a dispersion liquid of binder resin particles B-1 (0.2 g in terms of solid content mass), and 22 g of heptane were put thereinto. The container was set in a planetary ball mill P-7 (trade name, manufactured by Fritsch Japan Co., Ltd.) and the components were stirred for 10 minutes at 25°C and a rotation speed of 1 50 rpm. Next, the dispersion liquid of acetylene black (0.1 g in terms of solid content mass) was added, and 6.9 g of LiNi_{1/3}Co_{1/3}Mn_{1/3}O₂ as an active material (average particle size D_{CA} measured using the above-described measurement method: 4 µm, specific surface area S_{AM}: 0.1 m²/g) was put thereinto. Next, using the same method, the container was set in a planetary ball mill P-7 and the components were continuously mixed together for 5 minutes at 25°C and a rotation speed of 100 rpm. As a result, a positive electrode composition U-2 was prepared.

### <Preparation of Positive Electrode Composition U-3>

A positive electrode composition U-3 was prepared using the same preparation method as that of the positive electrode composition U-2, except that a dispersion liquid of binder resin particles B-2 was used instead of the dispersion liquid of binder resin particles B-1.

### <Preparation of Positive Electrode Composition U-4>

A positive electrode composition U-4 was prepared using the same preparation method as that of the positive electrode composition U-2, except that LiNi_{1/3}Co_{1/3}Mn_{1/3}O₂ as an active material (average particle size D_{CA} measured using the above-described measurement method: 12 µm, specific surface area S_{AM}: 0.05 m²/g) was used instead of LiNi_{1/3}Co_{1/3}Mn_{1/3}O₂ as an active material (average particle size D_{CA} measured using the above-described measurement method: 4 µm, specific surface area S_{AM}: 0.1 m²/g).

### <Preparation of Positive Electrode Composition U-5>

180 zirconia beads having a diameter of 5 mm were put into a 45 mL zirconia container (manufactured by Fritsch Japan Co., Ltd.), and 2.8 g of LPS having D_{SE} of 18 µm, the dispersion liquid of binder resin particles B-1 (0.2 g in terms of solid content mass), the dispersion liquid of acetylene black (0.1 g in terms of solid content mass), 22 g of heptane, and 6.9 g of LiNi_{1/3}Co_{1/3}Mn_{1/3}O₂ as an active material (average particle size D_{CA} measured using the above-described measurement method: 4 µm, specific surface area SAM: 0.1 m²/g) were put thereinto. Next, using the same method, the container was set in a planetary ball mill P-7 (trade name, manufactured by Fritsch Japan Co., Ltd.) and the components were continuously mixed together for 5 minutes at 25°C and a rotation speed of 100 rpm. As a result, a positive electrode composition U-5 was prepared.

### <Preparation of Positive Electrode Composition U-6>

180 zirconia beads having a diameter of 5 mm were put into a 45 mL zirconia container (manufactured by Fritsch Japan Co., Ltd.), and 2.8 g of LPS having D_{SE} of 2 µm, a dispersion liquid of binder resin particles B-1 (0.2 g in terms of solid content mass), and 22 g of heptane were put thereinto. The container was set in a planetary ball mill P-7 (trade name, manufactured by Fritsch Japan Co., Ltd.) and the components were stirred for 10 minutes at 25°C and a rotation speed of 150 rpm. Next, 0.1 g of acetylene black having an average particle size D_{CA} of 10 µm adjusted as described below was added, and 6.9 g of LiNi_{1/3}Co_{1/3}Mn_{1/3}O₂ as an active material (average particle size D_{CA} measured using the above-described measurement method: 4 µm, specific surface area S_{AM}: 0.1 m²/g) was put thereinto. Next, using the same method, the container was set in a planetary ball mill P-7 and the components were continuously mixed together for 5 minutes at 25°C and a rotation speed of 100 rpm. As a result, a positive electrode composition U-6 was prepared.

As the acetylene black, acetylene black (DENKA BLACK (trade name) manufactured by Denka Co., Ltd.) that was treated as described above and was adjusted to have an average particle size D_{CA} of 10 µm was used.

### Preparation of Acetylene Black (AB) Dispersion-

180 zirconia beads having a diameter of 5 mm were put into a 45 mL zirconia container (manufactured by Fritsch Japan Co., Ltd.), and 27 g of heptane and 3 g of acetylene black (DENKA BLACK (trade name) manufactured by Denka Co., Ltd.) were added. Next, the container was set in a planetary ball mill P-7 (trade name, manufactured by Fritsch Japan Co., Ltd.) and the components were mixed together for 20 minutes at 25°C and a rotation speed of 150 rpm. As a result, a dispersion liquid of acetylene black having an average particle size of 10 µm measured using the above-described measurement method was obtained.

### <Preparation of Positive Electrode Composition U-7>

A positive electrode composition U-7 was prepared using the same preparation method as that of the positive electrode composition U-2, except that butyl butyrate was used instead of heptane.

### <Preparation of Positive Electrode Composition U-8>

A positive electrode composition U-8 was prepared using the same preparation method as that of the positive electrode composition U-2, except that LiNi_{1/3}Co_{1/3}Mn_{1/3}O₂ as an active material (average particle size D_{CA}: 5 µm, specific surface area S_{AM}: 0.5 m²/g) was used instead of LiNi_{1/3}Co_{1/3}Mn_{1/3}O₂ as an active material (average particle size D_{CA} measured using the above-described measurement method: 4 µm, specific surface area S_{AM}: 0.1 m²/g).

### <Preparation of Positive Electrode Composition U-9>

A positive electrode composition U-9 was prepared using the same preparation method as that of the positive electrode composition U-2, except that a dispersion liquid of binder resin particles B-3 was used instead of the dispersion liquid of binder resin particles B-1.

### <Preparation of Positive Electrode Composition U-10>

180 zirconia beads having a diameter of 5 mm were put into a 45 mL zirconia container (manufactured by Fritsch Japan Co., Ltd.), and 2.8 g of LPS having D_{SE} of 2 µm, a dispersion liquid of binder resin particles B-1 (0.2 g in terms of solid content mass), and 22 g of heptane were put thereinto. The container was set in a planetary ball mill P-7 (trade name, manufactured by Fritsch Japan Co., Ltd.) and the components were stirred for 15 minutes at 25°C and a rotation speed of 150 rpm. Next, 0.1 g of acetylene black having an average particle size D_{CA} of 3 µm adjusted as described below was added, and 6.9 g of LiNi_{1/3}Co_{1/3}Mn_{1/3}O₂ as an active material (average particle size D_{CA} measured using the above-described measurement method: 4 µm, specific surface area S_{AM}: 0.1 m²/g) was put thereinto. Next, using the same method, the container was set in a planetary ball mill P-7 and the components were continuously mixed together for 5 minutes at 25°C and a rotation speed of 100 rpm. As a result, a positive electrode composition U-6 was prepared.

As the acetylene black, acetylene black (DENKA BLACK (trade name) manufactured by Denka Co., Ltd.) that was treated as described above and was adjusted to have an average particle size D_{CA} of 3 µm was used.

### Preparation of Acetylene Black (AB) Dispersion-

180 zirconia beads having a diameter of 5 mm were put into a 45 mL zirconia container (manufactured by Fritsch Japan Co., Ltd.), and 27 g of butyl butyrate and 3 g of acetylene black (DENKA BLACK (trade name) manufactured by Denka Co., Ltd.) were added. Next, the container was set in a planetary ball mill P-7 (trade name, manufactured by Fritsch Japan Co., Ltd.) and the components were mixed together for 20 minutes at 25°C and a rotation speed of 150 rpm. As a result, a dispersion liquid of acetylene black having an average particle size of 3 µm measured using the above-described measurement method was obtained.

### <Preparation of Positive Electrode Composition V-1 for Comparison>

180 zirconia beads having a diameter of 5 mm were put into a 45 mL zirconia container (manufactured by Fritsch Japan Co., Ltd.), and 2.8 g of LPS having D_{SE} of 5 µm, the latex of binder resin particles BC-1 (0.2 g in terms of solid content mass), and 22 g of decaline were put thereinto. The container was set in a planetary ball mill P-7 (trade name, manufactured by Fritsch Japan Co., Ltd.) and the components were stirred for 1 hour at 25°C and a rotation speed of 300 rpm. Next, 0.1 g of acetylene black (DENKA BLACK (trade name) manufactured by Denka Co., Ltd.) was added, and 6.9 g of LiNi_{1/3}Co_{1/3}Mn_{1/3}O₂ as an active material (average particle size D_{CA} measured using the above-described measurement method: 11.5 µm, specific surface area SAM: 0.5 m²/g) was put thereinto. Next, using the same method, the container was set in a planetary ball mill P-7 and the components were continuously mixed together for 5 minutes at 25°C and a rotation speed of 100 rpm. As a result, a positive electrode composition V-1 was prepared.

### <Preparation of Positive Electrode Composition V-2 for Comparison>

180 zirconia beads having a diameter of 5 mm were put into a 45 mL zirconia container (manufactured by Fritsch Japan Co., Ltd.), and 2.8 g of LPS having D_{SE} of 5 µm and 0.2 g of particles (average particle size measured using the above-described measurement method: 40 µm) of polytetrafluoroethylene (PTFT) were put thereinto. The container was set in a planetary ball mill P-7 (trade name, manufactured by Fritsch Japan Co., Ltd.) and the components were stirred for 1 hour at 25°C and a rotation speed of 200 rpm. Next, 0.1 g of acetylene black (DENKA BLACK (trade name) manufactured by Denka Co., Ltd.) was added, and 6.9 g of LiNi_{1/3}Co_{1/3}Mn_{1/3}O₂ as an active material (average particle size D_{CA} measured using the above-described measurement method: 10.0 µm, specific surface area SAM: 0.45 m²/g) was put thereinto. Next, using the same method, the container was set in a planetary ball mill P-7 and the components were continuously mixed together for 5 minutes at 25°C and a rotation speed of 100 rpm. As a result, a positive electrode composition V-2 was prepared.

### <Preparation of Positive Electrode Compositions V-3 and V-4 for Comparison>

Positive electrode compositions V-3 and V-4 were prepared using the same preparation method as that of the positive electrode composition U-2, except that the composition was changed as shown in Table 1.

### <Preparation of Positive Electrode Composition V-5 for Comparison>

A positive electrode composition V-5 was prepared using the same preparation method as that of the positive electrode composition U-2, except that LPS having D_{SE} of 35 µm synthesized as described above was used instead of LPS having D_{SE} of 2 µm.

Regarding each of the positive electrode active materials used for preparing the above-described positive electrode composition, the product D_{AM} × S_{AM} (cm³/g) of the average particle size D_{CA} (µm) and the specific surface area S_{AM} (m²/g) was calculated and was shown in Table 1.

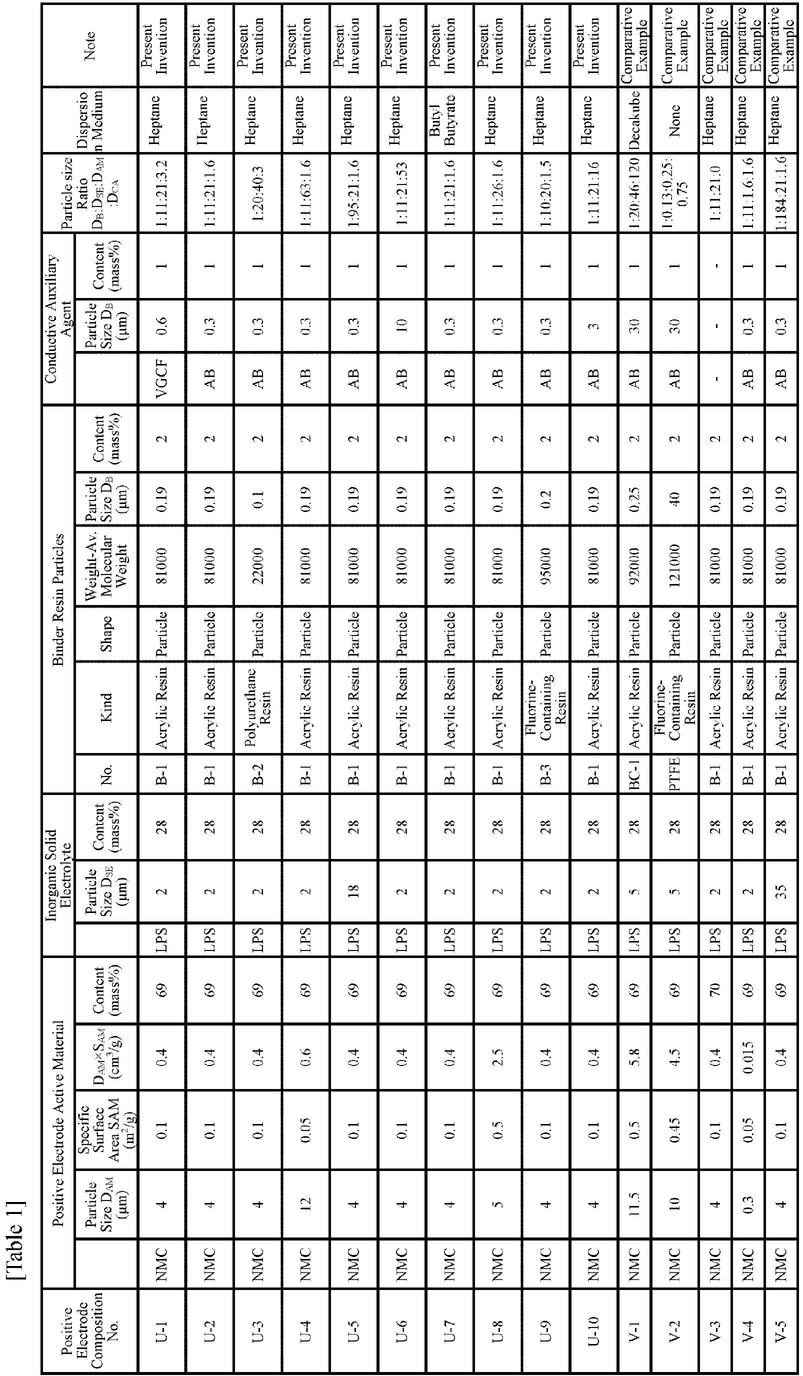

### In the column "Dispersion Medium" of Table 1, the dispersion medium used for preparing the positive electrode composition is shown.

### <Abbreviations of Table>

NMC: LiNi_{1/3}Co_{1/3}Mn_{1/3}O₂
LPS: sulfide-based inorganic solid electrolyte synthesized as described above
PTFE: particles of polytetrafluoroethylene (average particle size measured using the above-described measurement method: 40 µm)
VGCF: vapor-grown carbon fiber
AB: acetylene black

### 5. Preparation of Sheet for Solid Electrolyte Layer

The solid electrolyte composition S-1 obtained as described above was applied to an aluminum foil having a thickness of 20 µm using a Baker Type applicator (trade name: SA-201, manufactured by Tester Sangyo Co., Ltd.), and was heated at 80°C for 2 hours to dry the solid electrolyte composition. Next, using a heat press machine, the solid electrolyte composition that was dried at a temperature of 120°C and a pressure of 10 MPA for 10 seconds was heated and pressurized. As a result, a sheet S-1 for a solid electrolyte layer having a thickness of 100 µm was prepared.

### 6. Preparation of Positive Electrode Sheet for All-Solid State Secondary Battery

### <Preparation of Positive Electrode Sheet PS-1 for All-Solid State Secondary Battery>

The positive electrode composition U-l obtained as described above was applied to an aluminum foil (positive electrode current collector) having a thickness of 20 µm using a Baker Type applicator (trade name: SA-201, manufactured by Tester Sangyo Co., Ltd.), and was heated at 80°C for 2 hours to dry the positive electrode composition (to remove the dispersion medium). Next, using a heat press machine, the positive electrode composition U-1 that was dried was pressurized at 25°C (10 MPa, 1 minute). As a result, a positive electrode sheet PS-1 for an all-solid state secondary battery including the positive electrode active material layer having a thickness of 80 µm was prepared.

In the positive electrode sheet PS-1 for an all-solid state secondary battery obtained as described above, the particle size ratio between the binder resin particles, the inorganic solid electrolyte, the active material, and the conductive auxiliary agent was the same as the particle size ratio in the solid electrolyte composition U-1.

Next, the sheet S-1 for a solid electrolyte layer prepared as described above was disposed on the obtained positive electrode active material layer such that the solid electrolyte layer was in contact with the positive electrode active material layer, was pressurized at 25°C at 50 MPa using a press machine to be transferred (laminated), and was pressurized at 25°C at a pressure of 600 MPa. As a result, the positive electrode sheet PS-1 for an all-solid state secondary battery including the solid electrolyte layer having a thickness of 50 µm was prepared.

### <Preparation of Positive Electrode Sheets PS-2 to PS-10 and PV-1 to PV-5 for All-Solid State Secondary Battery>

Positive electrode sheets PS-2 to PS-10 and PV-1 to PV-5 for an all-solid state secondary battery were prepared using the same method as that of the positive electrode sheet PS-1 for an all-solid state secondary battery, except that the positive electrode composition shown in Table 2 was used instead of the positive electrode composition U-1.

In the positive electrode sheets PS-2 to PS-10 and PV-1 to PV-5 for an all-solid state secondary battery before the formation of the solid electrolyte layer, the particle size ratios between the binder resin particles, the inorganic solid electrolyte, the active material, and the conductive auxiliary agent were the same as the particle size ratios in the solid electrolyte composition U-2 to U-10 and V-1 to V-5.

### 7. Manufacturing of All-Solid State Secondary Battery

### <Manufacturing of All-solid State Secondary Battery 201>

The prepared positive electrode sheet PS-1 for an all-solid state secondary battery (the aluminum foil of the sheet S-1 for a solid electrolyte layer was peeled off) was cut out in a disk shape having a diameter of 14.5 mm, as shown in Fig. 2, the cut sheet was put into a 2032-type coin case 11 formed of stainless steel equipped with a spacer and a washer (not shown in Fig. 2), and a lithium foil (negative electrode active material layer) having a diameter of 14 mm that was cut in a disk shape was laminated on the solid electrolyte layer. A stainless steel foil (negative electrode current collector) having a diameter of 14.5 mm that was cut in a disk shape was laminated on the lithium foil, and the 2032-type coin case 11 was swaged. As a result, an all-solid state secondary battery 201 shown in Fig. 2 was manufactured.

The all-solid state secondary battery 201 manufactured as described above has the layer configuration shown in Fig. 1.

### <Manufacturing of All-solid State Secondary Batteries 202 to 210 and c21 to c25>

All-solid state secondary batteries 202 to 210 and c21 to c25 were manufactured using the same manufacturing method as that of the all-solid state secondary battery 201, except that positive electrode sheets for an all-solid state secondary battery shown in Table 2 were used instead of the positive electrode sheet PS-1 for an all-solid state secondary battery.

In the active material layers of the obtained all-solid state secondary batteries 201 to 210 to c21 to c25, the particle size ratios between the binder resin particles, the inorganic solid electrolyte, the active material, and the conductive auxiliary agent were the same as the particle size ratios in the solid electrolyte composition U-1 to U-10 and V-1 to V-5.

### 8. Evaluation of Solid Electrolyte Composition, Positive Electrode Sheet for All-Solid State Secondary Battery, and All-Solid State Secondary Battery

Regarding the positive electrode compositions, the positive electrode sheets for an all-solid state secondary battery, and the all-solid state secondary batteries prepared or manufactured as described above, the following characteristics were evaluated. The results are shown in Table 2.

### <Evaluation 1: Dispersibility>

Regarding the positive electrode compositions U-1 to U-10, V-1, P-3 to V-5, the dispersibility (dispersion stability) of the solid particles was evaluated. Since the positive electrode composition V-2 was a powder mixture, the dispersibility was not evaluated.

Each of the positive electrode compositions was added to a glass test tube having a diameter of 10 mm and a height of 15 cm up to a height of 10 cm and was left to stand at 25°C for 2 hours. Next, the height of the separated supernatant liquid was observed and measured by visual inspection. A ratio (height of supernatant liquid/height of total amount) of the height of the supernatant liquid to the height (10 cm) of the total amount of the positive electrode composition was obtained. The dispersibility of the positive electrode composition was evaluated based on one of the following evaluation ranks in which this ratio was included. During the calculation of the above-described ratio, the total amount refers to the total amount of the positive electrode composition (slurry) put into the glass test tube, and the supernatant liquid refers to the supernatant liquid produced (by solid-liquid separation) by precipitation of the solid components of the positive electrode composition.

In the present invention, as the above-described ratio decreases, the dispersibility is higher, and an evaluation rank "5" or higher is an acceptable level.

### -Evaluation Rank of Dispersibility-

8: Height of Supernatant Liquid/Height of Total Amount < 0.1
7: 0.1 ≤ Height of Supernatant Liquid/Height of Total Amount < 0.2
6: 0.2 ≤ Height of Supernatant Liquid/Height of Total Amount < 0.3
5: 0.3 ≤ Height of Supernatant Liquid/Height of Total Amount < 0.4
4: 0.4 ≤ Height of Supernatant Liquid/Height of Total Amount < 0.5
3: 0.5 ≤ Height of Supernatant Liquid/Height of Total Amount < 0.7
2: 0.7 ≤ Height of Supernatant Liquid/Height of Total Amount < 0.9
1: 0.9 ≤ Height of Supernatant Liquid/Height of Total Amount

### Evaluation 2: Binding Properties>

Regarding the positive electrode sheets PS-1 to PS-10 and PV-1 to PV-5 for an all-solid state secondary battery, the binding properties of the solid particles were evaluated.

Each of the positive electrode sheets for an all-solid state secondary battery was wound around rods having different diameters, and whether or not chipping and cracking of the positive electrode active material layer and the peeling of the positive electrode active material layer from the aluminum foil (positive electrode current collector) occurred was checked. The binding properties were evaluated based one of the following evaluation ranks where the minimum diameter of the rod around which the positive electrode sheet was wound without any abnormalities such as defects.

In the present invention, as the minimum diameter of the rod decreases, the binding properties are stronger, and an evaluation rank "5" or higher is an acceptable level.

### -Evaluation Rank of Binding Properties-

8: Minimum diameter < 2 mm
7: 2 mm ≤ Minimum diameter < 4 mm
6: 4 mm ≤ Minimum diameter < 6 mm
5: 6 mm ≤ Minimum diameter < 10 mm
4: 10 mm ≤ Minimum diameter < 14 mm
3: 14 mm ≤ Minimum diameter < 20 mm
2: 20 mm ≤ Minimum diameter < 32 mm
1: 32 mm ≤

### <Evaluation 3: Resistance>

Regarding the all-solid state secondary batteries 201 to 210 and c21 to c25, the resistance was measured, and the magnitude of resistance was evaluated.

The resistance of each of the all-solid state secondary batteries was evaluated using a charging and discharging evaluation device "TOSCAT-3000" (trade name, manufactured by Toyo System Corporation). Charging was performed at a current density of 0.1 mA/cm² until the battery voltage reached 4.2 V. Discharging was performed at a current density of 0.2 mA/cm² until the battery voltage reached 2.5 V. One charging operation and the discharging operation was set as one cycle, and three cycles of charging and discharging were repeated. After performing discharging at 5 mAh/g (amount of electricity per 1 g of the mass of the active material) of the third cycle, the battery voltage was read. The resistance of the all-solid state secondary battery was evaluated based on one of the following evaluation ranks in which this battery voltage was included. As the battery voltage increases, the resistance decreases. In this test, an evaluation rank of "5" or higher was an acceptable level.

### -Evaluation Rank of Resistance-

8: 4.1 V or higher
7: 4.0 V or higher and lower than 4.1 V
6: 3.9 V or higher and lower than 4.0 V
5: 3.7 V or higher and lower than 3.9 V
4: 3.5 V or higher and lower than 3.7 V
3: 3.2 V or higher and lower than 3.5 V
2: 2.5 V or higher and lower than 3.2 V
1: charging and discharging was not able to be performed

### <Evaluation 4: Discharge Capacity Retention Ratio (Cycle Characteristics)>

Regarding the all-solid state secondary batteries 201 to 210 and c21 to c25, the discharge capacity retention ratio was measured, and cycle characteristics were evaluated.

The discharge capacity retention ratio of each of the all-solid state secondary batteries was measured using a charging and discharging evaluation device "TOSCAT-3000" (trade name, manufactured by Toyo System Corporation). Charging was performed at a current density of 0.1 mA/cm² until the battery voltage reached 3.6 V. Discharging was performed at a current density of 0.1 mA/cm² until the battery voltage reached 2.5 V. One charging operation and the discharging operation was set as one cycle, and three cycles of charging and discharging were repeated. Next, the all-solid state secondary battery was initialized. When the discharge capacity (initial discharge capacity) of one cycle of charging and discharging after the initialization was represented by 100%, the number of charging and discharging cycles in which the discharge capacity retention ratio (discharge capacity relative to the initial discharge capacity) reached 80% was counted, and cycle characteristics were evaluated based one of the following evaluation ranks where the number of charging and discharging cycles was included.

In this test, regarding the discharge capacity retention ratio, an evaluation rank of "5" or higher was an acceptable level.

The initial discharge capacities of all the all-solid state secondary batteries 201 to 210 were sufficient for functioning as the all-solid state secondary batteries.

### -Evaluation Rank of Discharge Capacity Retention Ratio-

8: 500 cycles or more
7: 300 cycles or more and less than 500 cycles
6: 200 cycles or more and less than 300 cycles
5: 150 cycles or more and less than 200 cycles
4: 80 cycles or more and less than 150 cycles
3: 40 cycles or more and less than 80 cycles
2: 20 cycles or more and less than 40 cycles
1: less than 20 cycles

**[Table 2]**

| Positive Electrode Composition | | | Positive Electrode Sheet for All-Solid State Secondary Battery | | All-Solid State Secondary Battery | | | Note |
|---|---|---|---|---|---|---|---|---|
| No. | D_{B}:D_{SE}:D_{AM}:D_{CA} | Dispersibility | No. | Dispersibility | No. | Resistance | Discharge Capacity Retention Ratio | |
| U-1 | 1:11:21:3.2 | 7 | PS-1 | 7 | 201 | 6 | 7 | Present Invention |
| U-2 | 1:11:21:1.6 | 7 | PS-2 | 7 | 202 | 7 | 7 | Present Invention |
| U-3 | 1:20:40:3 | 6 | PS-3 | 8 | 203 | 7 | 7 | Present Invention |
| U-4 | 1:11:63:1.6 | 6 | PS-4 | 6 | 204 | 5 | 5 | Present Invention |
| U-5 | 1:95:21:1.6 | 6 | PS-5 | 6 | 205 | 5 | 5 | Present Invention |
| U-6 | 1:11:21:53 | 5 | PS-6 | 5 | 206 | 5 | 5 | Present Invention |
| U-7 | 1:11:21:1.6 | 7 | PS-7 | 8 | 207 | 8 | 7 | Present Invention |
| U-8 | 1:11:26:1.6 | 7 | PS-8 | 5 | 208 | 6 | 6 | Present Invention |
| U-9 | 1:10:20:1.5 | 6 | PS-9 | 5 | 209 | 6 | 6 | Present Invention |
| U-10 | 1:11:21:16 | 7 | PS-10 | 7 | 210 | 6 | 7 | Present Invention |
| V-1 | 1:20:46:120 | 2 | PV-1 | 3 | c21 | 3 | 2 | Comparative Example |
| V-2 | 1:0.13:0.25:0.75 | - | PV-2 | 2 | c22 | 2 | 2 | Comparative Example |
| V-3 | 1:11:21:0 | 4 | PV-3 | 4 | c23 | 2 | 3 | Comparative Example |
| V-4 | 1:11:1.6:1.6 | 3 | PV-4 | 5 | c24 | 3 | 3 | Comparative Example |
| V-5 | 1:184:21:1.6 | 3 | PV-5 | 5 | c25 | 3 | 3 | Comparative Example |

D_{B} represents the average particle size of the binder resin particles, D_{SE} represents the average particle size of the inorganic solid electrolyte, D_{AM} represents the average particle size of the active material, and D_{CA} represents the average particle size of the conductive auxiliary agent.

The dispersibility of the positive electrode composition V-2 is not evaluated and represented by "-" in the table.

As can be seen from Tables 1 and 2, in the positive electrode composition V-1 in which the specific combination of the binder resin particles, the inorganic solid electrolyte, the active material, and the conductive auxiliary agent were included but the particle size ratio thereof did not satisfy the condition regulated by the present invention, the dispersibility of the solid particles in the positive electrode composition was not sufficient, and the binding properties of the solid particles in the solid electrolyte-containing sheet were not strong. The positive electrode composition V-2 was a powder mixture. In the positive electrode composition V-3 not including the conductive auxiliary agent, the dispersibility of the solid particles in the positive electrode composition was not sufficient, and the binding properties of the solid particles in the solid electrolyte-containing sheet were not strong. Further, in the positive electrode compositions V-4 and V-5 in which the particle size ratio of the inorganic solid electrolyte or the active material did not satisfy the condition regulated by the present invention, the dispersibility of the solid particles in the positive electrode composition was not sufficient. Therefore, in the all-solid state secondary batteries c21 to c25 including the positive electrode active material layer formed of the positive electrode composition, the battery resistance was high (the interface resistance between the solid particles was high), the discharge capacity retention ratio was also poor, and the battery performance deteriorated after repeating charging and discharging

On the other hand, in the positive electrode compositions U-1 to U-10 in which the specific combination of the binder resin particles, the inorganic solid electrolyte, the active material, and the conductive auxiliary agent were dispersed in the dispersant such that the particle size ratio regulated by the present invention was satisfied, the dispersibility of the solid particles was high, and the solid particles in the positive electrode sheets for an all-solid state secondary battery were strongly bonded to each other. Therefore, in the all-solid state secondary batteries 201 to 210 including the positive electrode active material layer formed of the positive electrode composition, the battery resistance was low (an increase in the interface resistance between the solid particles was suppressed), the discharge capacity retention ratio was also high, and excellent battery performance was maintained even after repeating charging and discharging.

### Example 2

In this example, a positive electrode composition, a positive electrode sheet for an all-solid state secondary battery, and an all-solid state secondary battery were prepared or manufactured by using an oxide-based inorganic solid electrolyte as an inorganic solid electrolyte, and characteristics thereof were evaluated.

A positive electrode composition was prepared, a positive electrode sheet for an all-solid state secondary battery was prepared, and an all-solid state secondary battery was manufactured using the same method as that of Example 1, except that an oxide-based inorganic solid electrolyte Li_{0.33}La_{0.55}TiO₃ (LLT) was used instead of the synthesized sulfide-based inorganic solid electrolyte Li-P-S-based glass.

The dispersibility of the obtained positive electrode composition, the binding properties of the positive electrode sheet for an all-solid state secondary battery, and the resistance and discharge capacity retention ratio of the all-solid state secondary battery were evaluated using the same method as that of Example 1. As a result, it was found that, even when the oxide-based inorganic solid electrolyte is used as the inorganic solid electrolyte, as long as the specific combination of the binder resin particles, the inorganic solid electrolyte, the active material, and the conductive auxiliary agent satisfy the particle size ratio regulated by the present invention, excellent characteristics are exhibited as in Example 1 in which the sulfide-based inorganic solid electrolyte was used.

### Example 3

In this example, a negative electrode composition, a negative electrode sheet for an all-solid state secondary battery, and an all-solid state secondary battery were prepared or manufactured by using an negative electrode active material as an active material, and characteristics thereof were evaluated.

A negative electrode composition was prepared, a negative electrode sheet for an all-solid state secondary battery was prepared, and an all-solid state secondary battery was manufactured using the same method as that of Example 1, except that Li₄Ti₅O₁₂ (LTO) was used instead of NMC.

The dispersibility of the obtained negative electrode composition, the binding properties of the negative electrode sheet for an all-solid state secondary battery, and the resistance and discharge capacity retention ratio of the all-solid state secondary battery were evaluated using the same method as that of Example 1. As a result, it was found that, even when the negative electrode active material is used as the active material, as long as the specific combination of the binder resin particles, the inorganic solid electrolyte, the active material, and the conductive auxiliary agent satisfy the particle size ratio regulated by the present invention, excellent characteristics are exhibited as in Example 1 in which the positive electrode active material was used.

The present invention has been described using the embodiments. However, unless specified otherwise, any of the details of the above description is not intended to limit the present invention and can be construed in a broad sense within a range not departing from the concept and scope of the present invention disclosed in the accompanying claims.

The present application claims priority based on JP2017-198575 filed on October 12, 2017, the entire content of which is incorporated herein by reference.

### Explanation of References

1: negative electrode current collector
2: negative electrode active material layer
3: solid electrolyte layer
4: positive electrode active material layer
5: positive electrode current collector
6: operation portion
10: all-solid state secondary battery
11: 2032-type coin case
12: electrode sheet for an all-solid state secondary battery
13: all-solid state secondary battery

## Claims

1. A solid electrolyte composition comprising:
binder resin particles that are formed of a polymer having a weight-average molecular weight of 5000 or higher;
an Inorganic solid electrolyte having ion conductivity of a metal belonging to Group 1 or Group 2 in the periodic table;
an active material that is capable of intercalating and deintercalating ions of a metal belonging to Group 1 or Group 2 in the periodic table;
a conductive auxiliary agent; and
a dispersion medium,
wherein the binder resin particles, the inorganic solid electrolyte, the active material, and the conductive auxiliary agent satisfy the following particle size ratio,
an average particle size D_{B} of the binder resin particles:an average particle size D_{SE} of the inorganic solid electrolyte:an average particle size D_{AM} of the active material:an average particle size D_{CA} of the conductive auxiliary agent = 1:1 to 100:2 to 200:0.01 to 100.

2. The solid electrolyte composition according to claim 1,
wherein the average particle size D_{B} of the binder resin particles is 0.005 µm to 1 µm.

3. The solid electrolyte composition according to claim 1 or 2,
wherein the average particle size D_{SE} of the inorganic solid electrolyte is 0.2 µm to 4 µm.

4. The solid electrolyte composition according to any one of claims 1 to 3,
wherein the average particle size D_{AM} of the active material is 1 µm to 5 µm.

5. The solid electrolyte composition according to any one of claims 1 to 4,
wherein the average particle size D_{CA} of the conductive auxiliary agent is 0.01 µm to 0.5 µm.

6. The solid electrolyte composition according to any one of claims 1 to 5,
wherein the dispersion medium includes any one of an ester compound solvent, a ketone compound solvent, or an amine compound solvent.

7. The solid electrolyte composition according to any one of claims 1 to 6,
wherein the binder resin particles are particles of an acrylic resin or a polyurethane resin.

8. The solid electrolyte composition according to any one of claims 1 to 7,
wherein a product of the average particle size D_{AM} of the active material and a specific surface area S_{AM} of the active material is less than 2 cm³/g.

9. A solid electrolyte-containing sheet comprising:
a layer that is formed of the solid electrolyte composition according to any one of claims 1 to 8.

10. A solid electrolyte-containing sheet comprising:
binder resin particles that are formed of a polymer having a weight-average molecular weight of 5000 or higher;
an inorganic solid electrolyte having ion conductivity of a metal belonging to Group 1 or Group 2 in the periodic table;
an active material that is capable of intercalating and deintercalating ions of a metal belonging to Group 1 or Group 2 in the periodic table;
a conductive auxiliary agent; and
a dispersion medium,
wherein the binder resin particles, the inorganic solid electrolyte, the active material, and the conductive auxiliary agent satisfy the following particle size ratio,
an average particle size D_{B} of the binder resin particles:an average particle size D_{SE} of the inorganic solid electrolyte:an average particle size D_{AM} of the active material:an average particle size D_{CA} of the conductive auxiliary agent = 1:1 to 100:2 to 200:0.01 to 100.

11. An all-solid state secondary battery comprising:
a positive electrode active material layer;
a negative electrode active material layer; and
an inorganic solid electrolyte layer that is interposed between the positive electrode active material layer and the negative electrode active material layer,
wherein at least one of the positive electrode active material layer or the negative electrode active material layer is formed of the solid electrolyte composition according to any one of claims 1 to 8.

12. A method of manufacturing a solid electrolyte-containing sheet comprising:
a step of forming a film of the solid electrolyte composition according to any one of claims 1 to 8.

13. A method of manufacturing an all-solid state secondary battery comprising:
manufacturing an all-solid state secondary battery using the method according to claim 12.
